(19) Europäisches Patentamt
European Patent Office
Office européen des brevets

(11) Numéro de publication : **0 506 808 B1**

(12) **FASCICULE DE BREVET EUROPEEN**

(45) Date de publication du fascicule du brevet : **16.03.94 Bulletin 94/11**

(51) Int. Cl.$^5$ : **C08F 220/06,** B01F 17/00

(21) Numéro de dépôt : **91901829.1**

(22) Date de dépôt : **20.12.90**

(86) Numéro de dépôt international : **PCT/FR90/00933**

(87) Numéro de publication internationale : **WO 91/09067 27.06.91 Gazette 91/14**

(54) **AGENT DE DISPERSION ET/OU DE BROYAGE POUR SUSPENSIONS AQUEUSES MINERALES DE POTENTIEL ZETA VOISIN DE ZERO, SUSPENSIONS AQUEUSES LE CONTENANT ET APPLICATIONS.**

(30) Priorité : **20.12.89 FR 8917210**

(43) Date de publication de la demande : **07.10.92 Bulletin 92/41**

(45) Mention de la délivrance du brevet : **16.03.94 Bulletin 94/11**

(84) Etats contractants désignés : **AT BE DE DK ES FR GB IT NL SE**

(56) Documents cités :
**EP-A- 58 313**
**EP-A- 214 089**
**EP-A- 256 312**
**WO-A-86/04070**
**DE-A- 1 302 618**
**US-A- 3 634 366**
**US-A- 4 151 341**
**US-A- 4 500 693**

(73) Titulaire : **COATEX S.A.**
**35, Cours Aristide Briand**
**F-69300 Caluire (FR)**

(72) Inventeur : **BONNET, Catherine**
**35, rue Baudraud**
**F-69540 Irigny (FR)**
Inventeur : **MONGOIN, Jacques**
**76 bis, avenue Lanessan**
**F-69410 Champagne-au-Mont-d'Or (FR)**
Inventeur : **RAVET, Georges**
**Route Louis-Pradel**
**F-69290 Saint-Genis-les-Ollières (FR)**
Inventeur : **SUAU, Jean-Marc**
**249, la Duchère-Plateau**
**F-69009 Lyon (FR)**

(74) Mandataire : **Lepeudry-Gautherat, Thérèse et al**
**CABINET LEPEUDRY, 52, avenue Daumesnil**
**F-75012 Paris (FR)**

**EP 0 506 808 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Agent de dispersion et/ou de broyage pour suspensions aqueuses minérales de potentiel zéta voisin de zéro, suspensions aqueuses le contenant et applications.

### Domaine de l'invention

L'invention a pour objet un agent amphotère, hydrosoluble, de broyage et/ou de dispersion en phase aqueuse de pigments et/ou charges minérales, sélectionné dans la famille des copolymères de formule générale :

$$-(A)_p-(B)_q-(C)_r$$

dans laquelle le motif (A) est un monomère éthylénique à fonction carboxylique, le motif (B) est un monomère éthylénique non ionique, le motif (C) est un monomère éthylénique cationique dont le groupement cationique est éloigné de la chaîne éthylénique au moyen de groupes oxyalkylés et porteur d'au moins deux radicaux alkyles.

L'invention concerne en outre les suspensions aqueuses de pigments et/ou charges minérales qui contiennent un tel agent amphotère hydrosoluble de broyage et/ou de dispersion et dont le potentiel zéta est voisin de zéro.

L'invention concerne de plus l'application au domaine papetier, et plus particulièrement à la charge de masse et au couchage du papier, des suspensions aqueuses minérales réalisées à l'aide de l'agent amphotère, hydrosoluble.

L'invention concerne enfin l'application aux domaines des peintures et des plastiques de cet agent amphotère, hydrosoluble, de broyage et/ou de dispersion de charges minérales, en particulier du carbonate de calcium.

### Arrière-plan de l'invention

Lors de la fabrication du papier, il est de plus en plus habituel de remplacer une partie des fibres de cellulose, onéreuses, par des charges minérales et/ou pigments, meilleur marché, afin de réduire le coût du papier tout en améliorant, par exemple, son opacité, sa blancheur et son imprimabilité.

Les charges minérales et/ou pigments tels que, par exemple, le carbonate de calcium, les dolomies, le kaolin, le talc, le sulfate de calcium, l'oxyde de titane, l'hydroxyde d'aluminium, sont normalement incorporés dans la feuille de papier au cours de sa formation sur la toile.

Ceci est réalisé en incorporant la charge minérale et/ou pigment sous forme, soit pulvérulente, soit de suspension aqueuse, à la pâte papetière, de telle sorte que la pâte soit drainée sur la toile et que les particules de charges minérales et/ou pigments en suspension soient retenues dans la feuille fibreuse obtenue. Cette rétention, n'étant pas totale, pousse le papetier à utiliser des additifs chimiques et les fabricants de charges à mettre en oeuvre des agents de traitement de surface des matières minérales.

De même, lors de la fabrication du papier couché, le papetier utilise couramment dans sa formulation des charges minérales et/ou pigments généralement mis en suspension, soit par l'utilisateur, soit par le fabricant, à l'aide d'additifs anioniques tels que, par exemple, des polyacrylates, des tripolyphosphates, ou autres.

Depuis toujours, ces charges minérales et/ou pigments sont livrés au papetier sous forme pulvérulente. Mais les difficultés de manipulation desdites charges pulvérulentes et d'obtention de faible granulométrie, ainsi que leur utilisation ultérieure dans un milieu aqueux, ont amené les fabricants de ces charges à les livrer sous forme de suspensions aqueuses, stables dans le temps avec le minimum de sédimentation, obtenues au moyen d'agents polymères de traitement et/ou de dispersion et/ou de broyage, naturels ou synthétiques, anioniques ou cationiques.

De nombreux documents, (par exemple le brevet FR 2 539 137), décrivent des agents de broyage hydrosolubles à base de polymères et/ou copolymères de type anionique pour réaliser des suspensions aqueuses pigmentaires plus concentrées que celles de l'art connu. Dans le cas du brevet précité, l'agent dispersant est constitué par les polymères et/ou copolymères acryliques acides qui sont complètement neutralisés par au moins un agent de neutralisation disposant d'une fonction monovalente et au moins un agent de neutralisation disposant d'une fonction polyvalente. De cette manière, la suspension aqueuse obtenue, fortement anionique, est composée de particules minérales dont le potentiel zéta est toujours de l'ordre de -25 mV. Toutefois, de telles suspensions aqueuses de charges minérales et/ou de pigments dont les particules sont revêtues d'un agent anionique sont faiblement retenues au sein de la feuille du fait de leur polarité, ce qui contraint le papetier à rajouter des additifs cationiques dans le but d'annuler la charge anionique et obtenir ainsi un potentiel zéta voisin du point isoélectrique, zone dans laquelle l'homme de l'art doit travailler pour obtenir une bonne rétention.

Une telle technique est illustrée par le brevet EP 0 278 602 qui revendique une suspension aqueuse cationique de charges minérales dispersées au moyen d'un agent de dispersion comprenant un polyélectrolyte anionique tel que par exemple un polyacrylate de sodium auquel est ajouté un polyélectrolyte cationique tel que par exemple des chlorures polydiallyl diméthyl ammonium, des produits de copolymérisation d'épichlorhydrine et d'amines secondaires aliphatiques, ou autres.

De cette manière, des suspensions aqueuses de carbonate de calcium ont été préparées. Mais il n'a pas été possible d'obtenir simultanément une concentration en matière sèche élevée et une fine granulométrie des particules.

Deux autres documents (EP 0 281 134 et EP 0 307 795) décrivent des dispersions aqueuses pigmentaires cationiques destinées au couchage du papier. Ces suspensions aqueuses pigmentaires cationiques sont obtenues par addition de dispersants cationisés à partir par exemple de polyacrylates ou méthacrylates hydrophiles et/ou de polymères cationiques tels que par exemple les résines mélamine-formol, les résines épichlorhydrine, les résines dicyandiamide, les méthacrylates de diméthyle-amino-éthyle quaternaires, les polymères guanidine, les polymères diallyle.

De telles suspensions, ainsi réalisées, si elles permettent d'augmenter l'accrochage de la couche pigmentée sur le support cellulosique anionique, entraînent néanmoins des inconvénients, comme par exemple celui de ne pas permettre la réalisation pour le couchage de suspensions concentrées en particules de dimension pigmentaire, ou encore celui de présenter une incompatibilité avec tout milieu anionique pouvant se traduire par une prise en masse.

Un autre document (EP 0 035 640) décrit la mise en suspension aqueuse de charges minérales au moyen de composés d'ammonium quaternaire d'alcools gras sans préciser les dimensions granulométriques des charges utilisées. Mais la préparation de telles suspensions a montré qu'elle n'était possible que dans la limite où les matériaux minéraux dispersés étaient de dimension grossière.

Un document autre (DE 3 624 813) décrit la mise en suspension aqueuse de charges minérales au moyen d'agents dispersants et/ou de broyage constitués des copolymères comprenant de l'acide acrylique, du méthacrylate de diméthylaminoéthyle et éventuellement d'autres comonomères tels que l'acrylamide. Dans ce cas, des suspensions aqueuses de carbonate de calcium préparées ont montré qu'elles ne disposaient pas de l'effet antisédimentation recherché.

Sommaire de l'invention

Forte des inconvénients précités concernant les suspensions aqueuses cationiques ou les suspensions aqueuses anioniques ou encore les suspensions aqueuses obtenues à l'aide de copolymères amphotères dont le groupement azoté n'est pas éloigné de la chaîne au moyen de groupements oxyalkylés, la Demanderesse a trouvé de manière inattendue que ces groupements oxyalkylés, éloignant d'une distance minimale le radical quaternaire de la chaîne ont permis la mise au point d'un agent amphotère, hydrosoluble, de broyage et/ou de dispersion en phase aqueuse de pigments et/ou de charges minérales permettant d'obtenir une suspension aqueuse minérale, stable dans le temps avec le minimum de sédimentation, affinée, ayant simultanément une concentration en matière sèche d'au moins 50% en poids, des particules dont au moins 60% d'entre elles sont inférieures à 2 microns et ayant un potentiel zéta compris entre +5mV et -5 mV.

L'agent amphotère, hydrosoluble, de broyage et/ou de dispersion selon l'invention, répond à la formule générale :

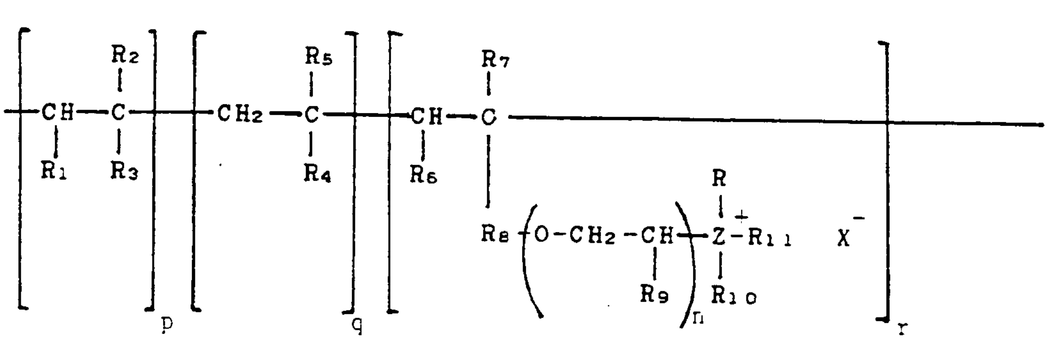

symbolisée par la forme générale :

$$-(A)_p-(B)_q-(C)_r$$

dans laquelle le motif (A) est un monomère éthylénique anionique à fonction carboxylique, le motif (B) est un monomère éthylénique non ionique, le motif (C) est un monomère éthylénique cationique comprenant au moins deux groupements oxyalkylés, et dans laquelle, bornes incluses :

a) p prend une valeur comprise entre 35% et 65% en poids par rapport à la masse totale en monomères,

b) q prend une valeur comprise entre 20% et 60% en poids par rapport à la masse totale en monomères,

c) r prend une valeur comprise entre 5% et 20% en poids par rapport à la masse totale en monomères,

d) avec p + q + r = 100% de la masse totale en monomères.

De préférence, p a une valeur comprise entre 40 % et 60 % en poids, q a une valeur comprise entre 25 % et 55 % en poids et r a une valeur comprise entre 5 % et 15 % en poids, par rapport à la masse totale en monomères.

Description détaillée de l'invention

Ainsi, l'art antérieur décrit pour l'essentiel des agents de dispersion et/ou de broyage, anioniques, cationiques ou amphotères en phase aqueuse. Selon l'invention, l'agent de broyage et/ou de dispersion en phase aqueuse se distingue de l'art antérieur par le fait qu'il se compose toujours des trois constituants monomériques (A), (B) et (C) précités, (C) étant doté d'au moins deux groupements oxyalkylés permettant d'obtenir directement et sans additifs supplémentaires des suspensions aqueuses de charges minérales et/ou de pigments possédant simultanément une très bonne stabilité au stockage, un potentiel zéta variant de -5mV à +5mV (zone de potentiel la plus favorable pour la rétention des charges lors de la formation de la feuille et zone recherchée lors du couchage et, plus particulièrement, des précouches du papier) et une bonne rétention papetière.

De plus, dans les domaines des peintures et des plastiques, l'agent de broyage et/ou de dispersion selon l'invention permet d'obtenir des suspensions aqueuses qui, après séchage, conduisent à des poudres dont les caractéristiques granulométriques sont identiques à celles obtenues avec la suspension aqueuse initiale, c'est-à-dire des poudres qui ne se réagglomèrent pas au séchage.

L'agent selon l'invention répond, comme cela a été antérieurement exprimé, à la formule générale :

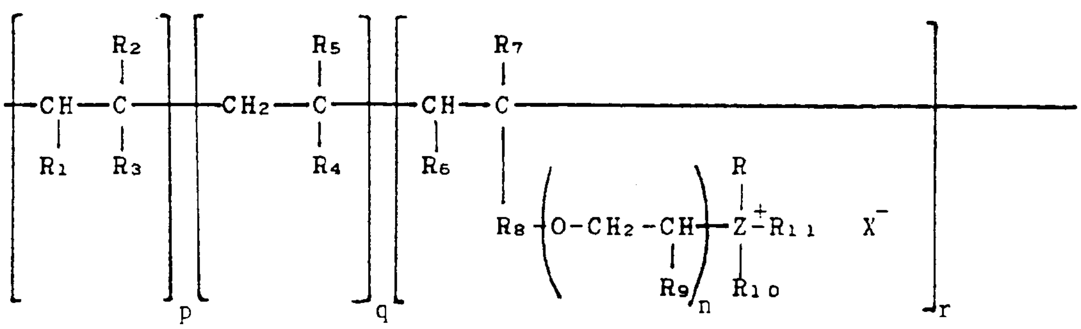

symbolisée par la forme générale :

$$(A)_p-(B)_q-(C)_r$$

dans laquelle :

- le motif (A) est de type anionique où :
  $R_1$ est H ou un radical carboxylique ou un ester,
  $R_2$ est H ou un alkyle ayant 1 à 3 atomes de carbone,
  $R_3$ est un groupement comportant au moins une fonction acide au moins partiellement salifiée,
  et p est compris, bornes incluses, entre 35% et 65% en poids par rapport à la masse totale en monomères,
- le motif (B) est de type non ionique, où :
  $R_4$ est $-CO-NH_2$, $-CO-OR_4'$ , $-CO-NR_4''R4'''$, $-CN$, $CH_3-CO-O-$,

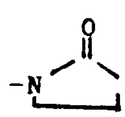

dans lequel :

$R_4$' est un radical alkyle ou oxyalkyle ayant 1 à 4 atomes de carbone,
$R_4$" est H ou un radical alkyle ayant 1 à 4 atomes de carbone,
$R_4$''' est un radical alkyle ayant 1 à 4 atomes de carbone, puis :
$R_5$ est H ou un alkyle ayant 1 à 4 atomes de carbone,
et q est compris, bornes incluses, entre 20% et 60% en poids par rapport à la masse totale en monomères,

- le motif (C) est de type cationique, de formule :

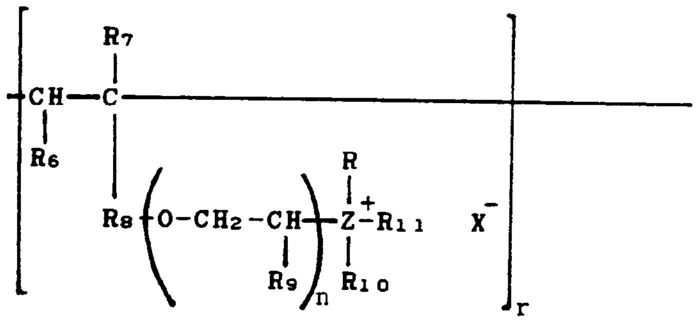

dans laquelle :
r est une valeur comprise, bornes incluses, entre 5% et 20% en poids par rapport à la masse totale en monomère et telle que p + q + r = 100 de la masse des monomères,
R est un alkyle ayant 1 à 4 atomes de carbone,
X est un contre-ion sulfate ou halogène,
Z est N ou S,
n = 2 à 30,
$R_5$ est H ou un radical carboxylique,
$R_7$ est H ou un alkyle ayant 1 à 3 atomes de carbone ou un radical carboxylique,
$R_5$ est un radical aryle ou arylalkyle ou alkylaryle ayant chacun 1 à 6 atomes de carbone, ou ester ou amide substitué ou un radical $-CH_2-$ ou uréthane de formule générale :

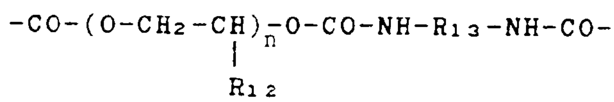

dans laquelle :
$R_{12}$ est H ou $CH_3$
$R_{13}$ est un alkyl ou un aryl
n = 2 à 30
$R_9$ est H ou $CH_3$
et, lorsque Z est N :
$R_{10}$ est une chaîne alkyle ayant 8 à 22 atomes de carbone ou un motif de formule :

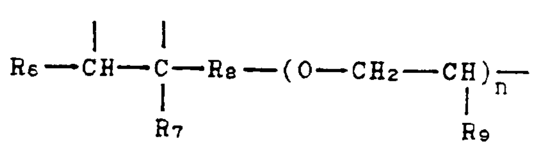

n = 2 à 30
et :
$R_{11}$ est une chaîne alkyle ayant 8 à 22 atomes de carbone,
et, lorsque Z est S :
$R_{10}$ n'existe pas
$R_{11}$ est une chaîne alkyle ayant 8 à 22 atomes de carbone.

Ces copolymères résultent, selon des procédés connus de synthèse ou de copolymérisation, en présence d'initiateurs et des régulateurs appropriés, en milieu aqueux, alcoolique, hydroalcoolique, aromatique, aliphatique ou dans un solvant halogéné, des trois monomères (A), (B), (C) définis ci-dessus.

Ainsi, le milieu de copolymérisation peut être l'eau, le méthanol, l'éthanol, le propanol, l'isopropanol, les butanols, ou encore le diméthylformamide, le diméthylsulfoxyde, le tétrahydrofurane, l'acétone, le méthyléthylcétone, l'acétate d'éthyle, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le . thiodiéthanol, les solvants halogénés comme le tétrachlorure de carbone, le chloroforme, le dichlorométhane, les éthers de monopropylèneglycol, diéthylèneglycol.

Les copolymères destinés à être utilisés dans l'application selon l'invention comme agent de dispersion et/ou de broyage sont généralement choisis parmi ceux ayant une viscosité spécifique comprise entre 0,35 et 0,75 et préférentiellement entre 0,40 et 0,70.

La viscosité spécifique des copolymères sélectionnés, qui est symbolisée par la lettre "η", est déterminée de la manière suivante :

On prépare une solution de copolymère sous forme de sel sodique par dissolution de 50 g sec du copolymère dans un litre d'une solution d'eau distillée contenant 60 g de chlorure de sodium.

Puis, on mesure avec un viscosimètre capillaire placé dans un bain thermostaté à 25°C le temps d'écoulement d'un volume donné de la solution précitée contenant le copolymère alcalin, ainsi que le temps d'écoulement du même volume de solution aqueuse de chlorure de sodium dépourvue dudit copolymère. Il est alors possible de définir la viscosité spécifique "η" grâce à la relation suivante :

$$\eta = \frac{\text{(Temps d'écoulement de la solution de copolymère)} - \text{(Temps d'écoulement de la solution de NaCl)}}{\text{(Temps d'écoulement de la solution Nacl)}}$$

Le tube capillaire est généralement choisi de telle manière que le temps d'écoulement de la solution de NaCl dépourvue de copolymère soit d'environ 90 à 100 secondes, donnant ainsi des mesures de viscosité spécifique d'une très bonne précision.

Dès la fin de la polymérisation, les copolymères acides selon l'invention en solution aqueuse sont recueillis et peuvent être mis en oeuvre sous cette forme.

Puis, les copolymères sélectionnés (en solution aqueuse) sont totalement ou partiellement neutralisés par un agent de neutralisation disposant d'une fonction monovalente tels que les cations alcalins.

En pratique, la phase liquide résultant de la copolymérisation et contenant le copolymère acide sélectionné peut être utilisée sous une forme salifiée comme agent de dispersion et/ou de broyage, mais elle peut également être séchée par tous les moyens connus pour en éliminer cette phase et isoler le copolymère sous la forme d'une fine poudre et être utilisée sous cette autre forme comme agent de dispersion et/ou de broyage.

Dans une plus large perspective, l'agent utilisé dans l'application selon l'invention peut être mis en oeuvre selon la méthode de préparation d'une suspension aqueuse de charges minérales et/ou de pigments contenant le carbonate de calcium, le gypse, les oxydes ou hydroxydes de calcium, magnésium, aluminium, l'oxyde de titane, le talc, le kaolin, les dolomies.

Dans le cas d'un simple délitage, ladite méthode consiste à réaliser sous agitation la préparation par délitage d'une suspension aqueuse de charge minérale en introduisant d'abord tout ou partie de l'agent selon l'invention dans la phase aqueuse, puis le matériau minéral, de manière à obtenir une suspension fluide et souhaitablement homogène. S'il est nécessaire d'affiner la granulométrie du matériau minéral, ladite méthode consiste alors à poursuivre après l'opération de délitage par les étapes suivantes :

a) on introduit en continu la suspension préalablement délitée dans une zone de broyage constituée par un broyeur à micro-éléments,

b) on maintient la température de la suspension au cours du broyage à un niveau inférieur à 100°C et préférentiellement comprise entre la température ambiante et 80°C,

c) on malaxe la suspension à broyer en présence des micro-éléments pendant le temps nécessaire à l'obtention de la granulométrie recherchée,

d) éventuellement, on introduit au cours du broyage en au moins une fois une fraction complémentaire de l'agent,

e) à la sortie du broyeur, on sépare en continu la suspension du matériau minéral finement broyé d'avec les corps broyants et les particules refusées parce que trop grossières.

L'agent selon l'invention est introduit dans la suspension aqueuse de charge minérale à raison de 0,05 à 2% en poids de matières sèches par rapport au poids sec des. matériaux minéraux, et préférentiellement à raison de 0,1 à 1%.

La suspension recueillie à l'issue du délitage et/ou du broyage a généralement une concentration en matière sèche d'au moins 50% et préférentiellement comprise dans l'intervalle de 50% à 70% en poids, la dimension des particules pigmentaires obtenues étant définie en cas de broyage par l'utilisateur.

La suspension pigmentaire ainsi affinée grâce à la présence de l'agent selon l'invention peut être avantageusement utilisée comme charge et/ou charge pigmentaire dans les domaines du papier, des peintures et des plastiques.

La portée et l'intérêt de l'invention seront mieux perçus grâce aux exemples illustratifs et comparatifs à l'égard de l'art antérieur.

**I Exemples relatifs au domaine du papier.**

Exemple 1

Cet exemple, dont le but est d'illustrer l'art connu, concerne la préparation de suspensions de carbonate de calcium par broyage.

Dans ce but, plusieurs suspensions de carbonate de calcium provenant du gisement d'Orgon (France) ont été préparées avec 6 types d'agents connus pour leur action dispersante et/ou de broyage, tels qu'ils sont décrits dans l'art antérieur.

Le diamètre médian du carbonate de calcium avant le broyage était de 40 micromètres.

Ces essais ont été exécutés selon les mêmes critères expérimentaux en effectuant le broyage dans le même appareillage afin que les résultats obtenus puissent être comparés.

Pour chaque essai, on a préparé une suspension du carbonate de calcium à une concentration de 70% en matière sèche exprimée en pour cent en poids.

L'agent de broyage était présent dans les suspensions à raison de 0,2% en poids de matière sèche par rapport à la masse du carbonate de calcium à broyer.

Chaque suspension ainsi préparée a été placée dans un broyeur du type Dyno-Mill à cylindre fixe et impulseur tournant, dont le corps broyant était constitué par des billes de corindon de diamètre compris dans l'intervalle 0,6 millimètre à 1,0 millimètre.

Le volume total occupé par le corps broyant était de 1 200 millilitres tandis que sa masse était de 2,9 kilogrammes.

La chambre de broyage avait un volume de 2 500 millilitres.

La vitesse circonférentielle du broyeur était de 10 mètres par seconde.

La suspension de carbonate de calcium était recyclée à raison de 18 litres par heure.

La sortie du broyeur Dyno-Mill était munie d'un séparateur de mailles 300 microns, permettant de séparer la suspension résultant du broyage et le corps broyant.

La température lors de chaque essai de broyage était maintenue inférieure à 60°C.

A la fin du broyage, la granulométrie était déterminée par l'intermédiaire du granulomètre Sédigraph 5100 de la société MICROMERITICS.

Les suspensions aqueuses de charges ont toutes été affinées de telle sorte que 25% des particules sont inférieures à 1 micron, pour une concentration de 70% en matière sèche avec une quantité de 0,2% en poids sec/sec d'agent de broyage dont les caractéristiques figurent dans le tableau 1/1 (numéro du polymère, viscosité spécifique, composition en monomères, nature de l'atome quaternisable et agent de quaternisation).

Les suspensions aqueuses précitées ont toutes été stockées 8 et 21 jours sans agitation et ont fait l'objet des tests suivants dont les résultats figurent dans le tableau 1/2.

a) Après 8 jours au repos

- . On a mesuré la stabilité des suspensions par l'introduction d'une spatule dans la suspension afin d'apprécier la présence éventuelle du dépôt, sa hauteur, sa consistance ainsi que l'effet de gel.
- . On a mesuré le potentiel zéta des suspensions en préparant un échantillon de la suspension par dissolution de trois gouttes de la suspension dans 300 ml d'eau bipermutée afin d'obtenir une suspension colloïdale à peine turbide.

Cette suspension avait un pH = 7 ± 0,5 et a été introduite dans la cellule électrolytique du zétamètre Lazer Zee Meter Model 501 de la société PEN KEM Inc. (USA). La lecture en mV s'est alors faite par lecture directe.

On a effectué les tests de rétention papetière sur toutes les suspensions de charges de la manière suivante :

On a préparé sous agitation lente dans un filtre Britt Jar de la société Paper Research Materials Inc. (USA), 500 grammes d'une suspension contenant 2,18 grammes en sec de fibres de cellulose (50% de longues, 50% de courtes) raffinées à 30 degrés Schopper et 0,545 gramme en sec de la suspension de carbonate de calcium broyé à l'aide des agents de broyage n°1 à 6 (soit 25% du poids total sec/sec des fibres).

En cours d'agitation, on a rajouté 0,03% et 0,09% en poids sec par rapport au poids sec de carbonate de calcium d'un mélange floculant et se composant de 83% de AN 934 de la société FLOERGER (France) et 17% de FL 1264 de la société FLOERGER (France).

On a maintenu l'agitation pendant 2 minutes puis, après avoir stoppé l'agitation, on a filtré en maintenant une pression de 30 mm de mercure dans le récipient de récupération du filtrat dénommé eaux blanches.

On a alors récupéré un échantillon de 20 grammes du filtrat sur lequel on a mesuré l'extrait de sec après passage à l'étuve pendant 2 heures à 120°C.

L'expérience de rétention a été refaite cinq fois pour chaque essai. La moyenne des cinq résultats est consignée dans le tableau 1/2.

b) Après 21 jours au repos

On a effectué les mêmes tests de stabilité des suspensions de carbonate de calcium ainsi que les mêmes tests de rétention papetière pour des quantités de floculant de 0,00%, 0,03% et 0,09%. Les résultats figurent dans le tableau 1/2.

Ayant mis en oeuvre des agents de dispersion et/ou de broyage bien connus de l'art antérieur, qui sont, comme référencés dans le tableau 1/1 :

TABLEAU 1/1

ART ANTERIEUR

| N° POLY-MERE | n spe | COMPOSITION | | | | | | | | | | | | | | | | | |
|---|---|---|---|---|---|---|---|---|---|---|---|---|---|---|---|---|---|---|---|
| | | A | | | | B | | | C | | | | | | | | | | |
| | | R1 | R2 | R3 | p | R4 | R5 | q | R6 | R7 | R8 | R9 | R10 | R11 | R12 | n | r | ATOME QUATER-NISABLE | AGENT DE QUATER-NISATION |
| 1 | 0,56 | H | H | COONa/Ca | 100 | | | 0 | | | | | | | | | 0 | | |
| 2 | 0,51 | H | H | COONa | 30 | CO-NH2 | H | 70 | | | | | | | | | 0 | | |
| 3 | 0,51 | H | H | COONa | 45 | CO-NH2 | H | 45 | H | CH3 | COO-(CH2)2- | H | CH3 | CH3 | H | 1 | 10 | N | NON |
| 4 | 0,5 | H | H | COONa | 45 | CO-NH2 | H | 45 | H | CH3 | COO-(CH2)2- | H | CH3 | CH3 | H | 1 | 10 | N | OUI |
| 5 | 0,55 | H | H | COONa | 45 | CO-NH2 | H | 5 | H | CH3 | COO-(CH2)2- | H | CH3 | CH3 | H | 1 | 50 | N | NON |
| 6 | 0,55 | H | H | COONa | 78 | * * * | H | 22 | | | | | | | | | | | NON |

* n SPE = viscosité spécifique
* NON = non quaternisé
* OUI = quaternisé
* p, q et r % exprimé par rapport à COOH (ETAT ACIDE)

*** CO-O-(CH2)2-N-(CH3)2

Polymère n° 1 : Homopolymère de l'acide acrylique neutralisé par 33% de calcium et 66% de

| | |
|---|---|
| | sodium. |
| Polymère n° 2 : | Copolymère d'acrylate de sodium et d'acrylamide. |
| Polymères nos. 3 et 5 : | Copolymères d'acrylate de sodium, d'acrylamide, de méthacrylate de diméthylaminoéthyle non quaternisé. |
| Polymère n° 4 : | Même copolymère que le copolymère n° 3 mais quaternisé par du sulfate de diméthyle. |
| Polymère n° 6 : | Copolymère d'acrylate de sodium et d'acrylate de diméthylaminoéthyle. |

TABLEAU 1/2

| N° POLY-MERE | n SPE | CARACTERISTIQUES DES SUSPENSIONS DE CACO3 | | | | TEST DE RETENTION PAPETIERE | | | | |
|---|---|---|---|---|---|---|---|---|---|---|
| | | STABILITE DES SUSPENSIONS CACO3 | | APPRECIATION DES SUSPENSIONS 3 SEMAINES | POTENTIEL ZETA 8J mV | 8 JOURS | | 3 SEMAINES | | |
| | | 8 JOURS | 3 SEMAINES | | | % FLOCULANT | | % FLOCULANT | | |
| | | | | | | 0,03% | 0,09% | 0,00% | 0,03% | 0,09% |
| 1 | 0,56 | PETIT DEPOT | DEPOT DUR | 1 | -25 | 0,13% | 0,07% | 0,23% | 0,06% | 0,05% |
| 2 | 0,51 | BON GEL | GEL ELASTIQUE | 2 | -15 | 0,06% | 0,05% | 0,15% | 0,05% | 0,04% |
| 3 | 0,51 | MAUVAIS | MAUVAIS | 0 | -10 | 0,25% | 0,15% | 0,20% | 0,15% | 0,12% |
| 4 | 0,5 | MAUVAIS | MAUVAIS | 0 | -5 | 0,20% | 0,12% | 0,25% | 0,18% | 0,12% |
| 5 | 0,55 | MAUVAIS | MAUVAIS | 0 | -4 | 0,15% | 0,09% | 0,25% | 0,15% | 0,08% |
| 6 | 0,55 | MAUVAIS | MAUVAIS | 0 | -2 | 0,12% | 0,07% | 0,20% | 0,05% | 0,04% |

**APPRECIATION DES SUSPENSIONS DE CACO3 3 SEMAINES :**
**0 : MAUVAIS 1 : DEPOT DUR 2 : GEL ELASTIQUE 3 : GEL ELASTIQUE**
**4 : BON GEL 5 : EXCELLENT**

Le tableau des résultats 1/2 conduit aux commentaires suivants :

Dans tous les cas, les suspensions aqueuses obtenues ne sont pas stables après 3 semaines de stockage

au repos, bien que, pour les polymères nos. 4, 5 et 6, le potentiel zéta soit proche de la neutralité et que les polymères nos. 2 et 6 donnent une bonne rétention au test Britt Jar. Aucun de ces agents de broyage et/ou de dispersion de l'art antérieur ne donne donc simultanément des suspensions aqueuses de carbonate de calcium stables au stockage et dont le potentiel zéta soit proche de la neutralité tout en présentant une bonne rétention papetière.

Exemple 2

Cet exemple, destiné à illustrer la nécessité d'avoir un agent de broyage toujours composé de trois constituants monomériques (A), (B) et (C) précités, concerne le broyage de carbonate de calcium en présence d'un agent uniquement composé de l'un ou de deux des monomères (A) ou (B) ou (C) et référencé dans le tableau 2/1.

Le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été soumises aux mêmes tests que ceux décrits dans l'exemple 1. Les résultats de ces essais sont consignés dans le tableau 2/2.

TABLEAU 2/1

COPOLYMERE ACIDE ACRYLIQUE + MOTIF C

| N° POLYMERE | n SPE | COMPOSITION A R1 | R2 | R3 | p | B R4 | R5 | q | C R6 | R7 | R8 | R9 | R10 | R11 | R12 | n | r | ATOME QUATERNISABLE | AGENT DE QUATERNISATION |
|---|---|---|---|---|---|---|---|---|---|---|---|---|---|---|---|---|---|---|---|
| 1 | 0,56 | H | H | COONa/Ca | 100 | | | 0 | | | | | | | | | 0 | | |
| 2 | 0,51 | H | H | COONa | 30 | CO-NH2 | H | 70 | | | | | | | | | 0 | | |
| 7 | 0,51 | H | H | COONa | 90 | | | 0 | H | CH3 | *** | H | C12 | C12 | H | 10 | 10 | N | NON |
| 8 | 0,48 | H | H | COONa | 90 | | | 0 | H | CH3 | *** | H | C12 | C12 | H | 10 | 10 | N | NON |
| 9 | 0,53 | H | H | COONa | 90 | | | 0 | H | CH3 | *** | H | C12 | C12 | H | 10 | 10 | N | NON |
| 10 | 0,65 | H | H | COONa | 90 | | | 0 | H | CH3 | *** | H | C12 | C12 | H | 10 | 10 | N | NON |
| 11 | 0,65 | H | H | COONa | 90 | | | 0 | H | CH3 | *** | H | C12 | C12 | H | 10 | 10 | N | OUI |
| 12 | 0,52 | H | H | COONa | 90 | | | 0 | H | CH3 | *** | H | C12 | C12 | H | 10 | 10 | N | NON |
| 13 | 0,65 | H | H | COONa | 80 | | | 0 | H | CH3 | *** | H | C12 | C12 | H | 10 | 20 | N | NON |
| 14 | 0,6 | H | H | COONa | 70 | | | 0 | H | CH3 | *** | H | C12 | C12 | H | 10 | 30 | N | NON |

* n SPE= VISCOSITE SPECIFIQUE
* NON = non quaternisé
* OUI = quaternisé
*** R8 = -CO-(O-CH2-CH2)-O-CO-NH-R13-NH-CO- avec R13 = 2 METHYL BENZYL
* C12 = -(CH2)11-CH3
* p,q et r % exprimé par rapport à COOH (ETAT ACIDE)

Les agents de broyage référencés dans le tableau 2/1 sont :

Polymères nos. 1 et 2 : les mêmes que ceux de l'exemple 1.

Polymères nos. 7 à 12 : copolymères à composition monomérique constante et viscosité spécifique variable composés d'acrylate de sodium et de monomère (C) résultant de la condensation de méthacrylate de monoéthylène glycol, de toluène di-isocyanate et dilaurylamine condensé avec 10 moles d'oxyde d'éthylène.

Polymères nos. 13 et 14 : Mêmes constituants monomères que pour les polymères nos. 7 et 12, avec une composition différente.

TABLEAU 2/2

| N° POLY-MERE | n SPE | CARACTERISTIQUES DES SUSPENSIONS DE CACO3 — STABILITE DES SUSPENSIONS CACO3 — 8 JOURS | 3 SEMAINES | APPRECIATION DES SUSPENSIONS 3 SEMAINES | POTENTIEL ZETA 8J mV | TEST DE RETENTION PAPETIERE — 8 JOURS — % FLOCULANT — 0,03% | 0,09% | 3 SEMAINES — % FLOCULANT — 0,00% | 0,03% | 0,09% |
|---|---|---|---|---|---|---|---|---|---|---|
| 1 | 0,56 | PETIT DEPOT | DEPOT DUR | 1 | -25 | 0,13% | 0,07% | 0,23% | 0,06% | 0,05% |
| 2 | 0,51 | BON GEL | GEL ELASTIQUE | 2 | -15 | 0,06% | 0,05% | 0,15% | 0,05% | 0,04% |
| 7 | 0,51 | DEPOT DUR | DEPOT DUR | 0 | -20 | 0,10% | 0,09% | 0,21% | 0,09% | 0,08% |
| 8 | 0,48 | DEPOT DUR | DEPOT DUR | 0 | -20 | 0,11% | 0,08% | 0,23% | 0,10% | 0,08% |
| 9 | 0,53 | DEPOT DUR | DEPOT DUR | 0 | -20 | 0,12% | 0,10% | 0,25% | 0,15% | 0,09% |
| 10 | 0,65 | DEPOT DUR | DEPOT DUR | 0 | -20 | 0,10% | 0,08% | 0,20% | 0,09% | 0,08% |
| 11 | 0,65 | DEPOT DUR | DEPOT DUR | 0 | -20 | 0,11% | 0,08% | 0,20% | 0,09% | 0,08% |
| 12 | 0,52 | DEPOT DUR | DEPOT DUR | 0 | -20 | 0,10% | 0,07% | 0,20% | 0,09% | 0,08% |
| 13 | 0,65 | DEPOT DUR | DEPOT DUR | 0 | -15 | 0,10% | 0,08% | 0,20% | 0,09% | 0,08% |
| 14 | 0,6 | DEPOT DUR | DEPOT DUR | 0 | -13 | 0,10% | 0,07% | 0,20% | 0,09% | 0,08% |

APPRECIATION DES SUSPENSIONS DE CACO3 3 SEMAINES :
0 : MAUVAIS 1 : DEPOT DUR 2 : GEL ELASTIQUE 3 : GEL ELASTIQUE
4 : BON GEL 5 : EXCELLENT

La mise en oeuvre de ces agents référencés dans le tableau 2/1 conduisant aux résultats consignés dans

le tableau 2/2, apporte les commentaires suivants :

- Dans tous les cas, il n'y a aucune stabilité des suspensions aqueuses de carbonate de calcium après 3 semaines de stockage sans agitation provoquant un dépôt dur au fond de l'échantillon. D'autre part, on constate que tous les potentiels zéta sont assez fortement électronégatifs et que, pour les polymères nos. 7 à 14, les résultats de rétention papetière sont médiocres.
- On voit donc à la lumière de ces résultats que les polymères composés seulement d'un ou deux monomères de type (A), (B) ou (C) ne permettent pas d'obtenir à la fois une stabilité des suspensions aqueuses au stockage, un potentiel zéta compris entre -5mV et +5mV ainsi qu'une bonne rétention papetière.

Exemple 3

Cet exemple a pour but de montrer l'influence négative de l'absence d'un atome quaternisable quaternisé et/ou d'une chaîne oxyalkylée dans la structure du monomère (C) éthylénique cationique.

Cet exemple concerne le broyage d'une suspension aqueuse de carbonate de calcium en présence de l'agent sans atome quaternisable quaternisé et/ou sans chaîne oxyalkylée.

Pour ce faire, le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été soumises aux mêmes tests que ceux décrits dans l'exemple 1. Les résultats de ces essais sont consignés dans le tableau 3/2.

TABLEAU 3/1

TERPOLYMERE ACIDE ACRYLIQUE+ ACRYLAMIDE + MOTIF C : CHAINE MONOOXYETHYLEE

| N° POLY-MERE | n SPE | COMPOSITION | | | | | | | | | | | | | | | | | |
|---|---|---|---|---|---|---|---|---|---|---|---|---|---|---|---|---|---|---|---|
| | | A | | | | B | | | C | | | | | | | | | | |
| | | R1 | R2 | R3 | p | R4 | R5 | q | R6 | R7 | R8 | R9 | R10 | R11 | R12 | n | r | ATOME QUATER-NISABLE | AGENT DE QUATER-NISATION |
| 15 | 1,1 | H | H | COONa | 45 | CONH2 | H | 45 | H | CH3 | * * * | H | C12 | | H | 23 | 10 | | NON |
| 16 | 0,44 | H | H | COONa | 45 | CONH2 | H | 45 | H | CH3 | * * * | H | C12 | | H | 23 | 10 | | NON |
| 17 | 0,6 | H | H | COONa | 45 | CONH2 | H | 45 | H | CH3 | * * * | H | C12 | | H | 9 | 10 | | NON |
| 18 | 0,69 | H | H | COONa | 45 | CONH2 | H | 40 | H | CH3 | * * * | H | C12 | | H | 9 | 15 | | NON |
| 19 | 0,67 | H | H | COONa | 45 | CONH2 | H | 45 | H | CH3 | * * * * * * | | CH3 | CH3 | H | 0 | 10 | N | OUI C12Br |
| 20 | 0,6 | H | H | COONa | 45 | CONH2 | H | 45 | H | CH3 | * * * * * * | | CH3 | CH3 | H | 0 | 10 | N | OUI C12Br |

*** R8 = -CO-(O-CH2-CH2)-O-CO-NH-R13-NH-CO AVEC R13 = 2 METHYL BENZYL
****** R8 = (CH3)2-CH2-CH2-OH QUATERNISE PAR C12BR
* C12 = CH3-(CH2)11-
* n SPE = VISCOSITE SPECIFIQUE
* NON = NON QUATERNISE
* OUI = QUATERNISE
* p,q et r % exprimé par rapport à COOH ( ETAT ACIDE)

Les agents de broyage référencés dans le tableau 3/1 sont :

- Polymères nos. 15 à 18 : copolymères d'acrylate de sodium, d'acrylamide et de monomère (C) résultant de la condensation de méthacrylate de monoéthylèneglycol, de toluènediisocyanate et d'alcool laurique oxyéthylé.
- Polymères nos. 19 et 20 : copolymères composés d'acrylate de sodium, d'acrylamide et de monomère

(C), sans groupe oxyalkylé, résultant de l'estérification d'acide méthacrylique avec le diméthylaminoéthanol préalablement quaternisé par du bromure de lauryle.

TABLEAU 3/2

| N° POLY-MERE | n SPE | CARACTERISTIQUES DES SUSPENSIONS DE CACO3 STABILITE DES SUSPENSIONS CACO3 8 JOURS | 3 SEMAINES | APPRECIATION DES SUSPENSIONS 3 SEMAINES | POTENTIEL ZETA 8J mV | TEST DE RETENTION PAPETIERE 8 JOURS % FLOCULANT 0,03% | 0,09% | 3 SEMAINES % FLOCULANT 0,00% | 0,03% | 0,09% |
|---|---|---|---|---|---|---|---|---|---|---|
| 15 | 1,1 | MAUVAIS | MAUVAIS | 0 | -15 | 0,18% | 0,15% | 0,25% | 0,20% | 0,19% |
| 16 | 0,44 | BON GEL | GEL ELASTIQUE | 2 | -10 | 0,06% | 0,07% | 0,11% | 0,05% | 0,03% |
| 17 | 0,6 | BON GEL | GEL ELASTIQUE | 2 | -10 | 0,05% | 0,06% | 0,14% | 0,04% | 0,04% |
| 18 | 0,69 | MAUVAIS | MAUVAIS | 0 | -15 | 0,22% | 0,19% | 0,30% | 0,25% | 0,19% |
| 19 | 0,67 | MAUVAIS | MAUVAIS | 0 | -5 | 0,19% | 0,17% | 0,22% | 0,19% | 0,15% |
| 20 | 0,6 | MAUVAIS | MAUVAIS | 0 | -5 | 0,18% | 0,15% | 0,20% | 0,18% | 0,14% |

APPRECIATION DES SUSPENSIONS DE CACO3 3 SEMAINES :
0 : MAUVAIS 1 : DEPOT DUR 2 : GEL ELASTIQUE 3 : GEL ELASTIQUE
4 : BON GEL 5 : EXCELLENT

La mise en oeuvre de ces agents référencés en tableau 3/1 conduisant aux résultats consignés dans le tableau 3/2 apporte les commentaires suivants :

Dans tous les cas, il y a une mauvaise stabilité des suspensions aqueuses de carbonate de calcium après 3 semaines de stockage sans agitation allant jusqu'à un dépôt dur dans le temps.

D'autre part, on constate que pour les agents non quaternisés (polymères nos. 15 à 18), le potentiel zéta est assez fortement électronégatif.

On constate également que, pour les agents ne possédant pas de groupe éthoxylé (polymères nos. 19 et 20), les résultats de rétention papetière au test Britt Jar sont mauvais.

Ces divers résultats montrent donc que l'absence d'un atome quaternisable quaternisé et/ou d'une chaîne oxyalkylée dans la structure du monomère (C) éthylénique cationique ne permet pas d'obtenir à la fois la stabilité des suspensions aqueuses au stockage, un potentiel zéta voisin de zéro et une bonne rétention papetière.

Exemple 4

Cet exemple, destiné à illustrer l'objet de l'invention par la sélection des monomères (A), (B) et (C) dans les pourcentages revendiqués, c'est-à-dire p compris entre 35% et 65% en poids, q compris entre 20% et 60% en poids et r compris entre 5% et 20% en poids, concerne le broyage d'une suspension aqueuse de carbonate de calcium en présence de l'agent selon l'invention, dans le cas où les trois monomères (A), (B) et (C) sont présents à des pourcentages pondéraux p, q, r différents.

Le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été soumises aux mêmes tests que ceux décrits dans l'exemple 1. Les résultats de ces essais sont consignés dans le tableau 4/2.

TABLEAU 4/1

**TERPOLYMERE ACIDE ACRYLIQUE + ACRYLAMIDE + MOTIF C : CHAINE MONOOXYETHYLEE**
**En faisant varier les différents taux de monomères et le nombre d'oxyde d'éthyléne**

| N° POLY-MERE | n SPE | COMPOSITION | | | | | | | | | | | | | | | | | ATOME QUATER-NISABLE | AGENT DE QUATER-NISATION |
|---|---|---|---|---|---|---|---|---|---|---|---|---|---|---|---|---|---|---|---|---|
| | | A | | | | B | | | C | | | | | | | | | | | |
| | | R1 | R2 | R3 | p | R4 | R5 | q | R6 | R7 | R8 | R9 | R10 | R11 | R12 | n | r | | | |
| 21 | 0,72 | H | H | COONa | 78 | CO-O-(CH)2-N | CH3 | 12 | H | CH3 | * * * | H | C12 | C12 | H | 10 | 10 | | N | NON |
| 22 | 0,72 | H | H | COONa | 78 | CO-O-(CH)2-N | CH3 | 12 | H | CH3 | * * * | H | C12 | C12 | H | 10 | 10 | | N | OUI |
| 23 | 0,8 | H | H | COONa | 72 | CONH2 | H | 18 | H | CH3 | * * * | H | C12 | C12 | H | 10 | 10 | | N | NON |
| 24 | 0,62 | H | H | COONa | 72 | CONH2 | H | 18 | H | CH3 | * * * | H | C12 | C12 | H | 10 | 10 | | N | NON |
| 25 | 0,62 | H | H | COONa | 72 | CONH2 | H | 18 | H | CH3 | * * * | H | C12 | C12 | H | 10 | 10 | | N | OUI |
| 26 | 0,99 | H | H | COONa | 45 | CONH2 | H | 45 | H | CH3 | * * * | H | C12 | C12 | H | 10 | 10 | | N | OUI |
| 27 | 0,8 | H | H | COONa | 45 | CONH2 | H | 45 | H | CH3 | * * * | H | C12 | C12 | H | 10 | 10 | | N | OUI |
| 28 | 0,64 | H | H | COONa | 45 | CONH2 | H | 45 | H | CH3 | * * * | H | C12 | C12 | H | 10 | 10 | | N | OUI |
| 29 | 0,51 | H | H | COONa | 45 | CONH2 | H | 45 | H | CH3 | * * * | H | C12 | C12 | H | 10 | 10 | | N | OUI |
| 30 | 0,51 | H | H | COONa | 45 | CONH2 | H | 40 | H | CH3 | * * * | H | C12 | C12 | H | 10 | 15 | | N | NON |

*** R8 = -CO-(O-CH2-CH2)-O-CO-NH-R13-NH-CO AVEC R13 = 2 METHYL BENZYL
* n SPE = VISCOSITE SPECIFIQUE
* NON = NON QUATERNISE
* OUI = QUATERNISE
* C12 = -(CH2)11-CH3
* p, q et r exprimé par rapport à COOH (ETAT ACIDE)

TERPOLYMERE ACIDE ACRYLIQUE + ACRYLAMIDE + MOTIF C: CHAINE MONOOXYETHYLEE TABLEAU 4/1 (suite)

En faisant varier les différents taux de monomères et le nombre d'oxyde d'éthyléne

| N° POLY-MERE | n SPE | COMPOSITION A | | | | B | | | C | | | | | | | | | ATOME QUATER-NISABLE | AGENT DE QUATER-NISATION |
|---|---|---|---|---|---|---|---|---|---|---|---|---|---|---|---|---|---|---|---|
| | | R1 | R2 | R3 | p | R4 | R5 | q | R6 | R7 | R8 | R9 | R10 | R11 | R12 | n | r | | |
| 31 | 0,6 | H | H | COONa | 45 | CONH2 | H | 45 | H | CH3 | * * * | H | C12 | C12 | H | 25 | 10 | N | NON |
| 32 | 0,51 | H | H | COONa | 45 | CONH2 | H | 45 | H | CH3 | * * * | H | C12 | C12 | H | 25 | 10 | N | OUI |
| 33 | 0,55 | H | H | COONa | 40 | CONH2 | H | 45 | H | CH3 | * * * | H | C12 | C12 | H | 25 | 15 | N | NON |
| 34 | 0,6 | H | H | COONa | 40 | CONH2 | H | 50 | H | CH3 | * * * | H | C12 | C12 | H | 25 | 10 | N | NON |
| 35 | 0,55 | H | H | COONa | 50 | CONH2 | H | 30 | H | CH3 | * * * | H | C12 | C12 | H | 25 | 20 | N | NON |
| 36 | 0,68 | H | H | COONa | 45 | CONH2 | H | 40 | H | CH3 | * * * | H | C12 | C12 | H | 25 | 15 | N | NON |
| 37 | 0,63 | H | H | COONa | 46 | CONH2 | H | 30 | H | CH3 | * * * | H | C12 | C12 | H | 25 | 24 | N | NON |
| 38 | 0,63 | H | H | COONa | 46 | CONH2 | H | 30 | H | CH3 | * * * | H | C12 | C12 | H | 25 | 24 | N | OUI |
| 39 | 0,94 | H | H | COONa | 72 | CONH2 | H | 18 | H | CH3 | * * * | H | CH3 | CH3 | H | 1 | 10 | N | NON |
| 40 | 0,57 | H | H | COONa | 72 | CONH2 | H | 18 | H | CH3 | * * * | H | CH3 | CH3 | H | 1 | 10 | N | OUI |
| 41 | 0,85 | H | H | COONa | 45 | CONH2 | H | 45 | H | CH3 | * * * | H | CH3 | CH3 | H | 1 | 10 | N | NON |

*** R8 = -CO-(O-CH2-CH2)-O-CO-NH-R13-NH-CO AVEC R13 = 2 METHYL BENZYL

* n SPE = VISCOSITE SPECIFIQUE

* NON = NON QUATERNISE

* OUI = QUATERNISE

* C12 = -(CH2)11-CH3

* p, q et r exprimé par rapport à COOH (ETAT ACIDE)

Les agents de broyage selon l'invention référencés dans le tableau 4/1 sont :

- Polymère n° 21 : Copolymère d'acrylate de sodium, d'un monomère (B) résultant de l'estérification de l'acide méthacrylique par le diméthyl aminoéthanol et d'un monomère (C) résultant de la condensation de méthacrylate de monoéthylèneglycol, de toluène diisocyanate et d'alcool dilaurique oxyéthylé.
- Polymère n° 22 : Même copolymère que le polymère n° 21 mais dont le monomère (C) est quaternisé avant polymérisation par du sulfate de diméthyle.

Pour tous les polymères suivants nos. 23 à 41, les constituants monomères (A), (B) et (C) sont les mêmes, où le monomère anionique (A) représente l'acrylate de sodium, le monomère non ionique (B) l'acrylamide et le monomère cationique (C) le produit résultant de la condensation de méthacrylate de monoéthylène glycol, de toluène diisocyanate et, soit d'alcool dilaurique pour les polymères nos. 23 à 38, soit d'alcool isopropylique pour les polymères nos. 39 à 41.

Les pourcentages pondéraux respectifs p, q, r de chacun des monomères (A), (B) et (C) varient ainsi que le nombre n de groupement d'oxyde d'éthylène.

- Des polymères nos. 23 à 25 :
  p = 72 ; q = 18 ; r = 10 ; n = 10
- Des polymères nos. 26 à 29 :
  p = 45 ; q = 45 ; r = 10 ; n = 10
- Pour le polymère n° 30 :
  p = 45 ; q = 40 ; r = 15 ; n = 10
- Pour les polymères nos. 31 et 32 :
  p = 45 ; q = 45 ; r = 10 ; n = 25
- Pour les polymères nos. 33 à 38 :
  on a toujours n = 25 et les valeurs successives de p sont : 40, 40, 50, 45, 46, 46.

Les valeurs de q sont : 45, 50, 30, 40, 30, 30.
Les valeurs de r sont : 15, 10, 20, 15, 24, 24.

Pour les polymères nos. 39 à 41 :
n = 1 ; r = 10 et p prend les valeurs successives 72, 72, 45 tandis que q prend les valeurs successives 18, 18, 45.

TABLEAU 4/2

| N° POLYMERE | n SPE | CARACTERISTIQUES DES SUSPENSIONS DE CACO3 | | | | TEST DE RETENTION PAPETIERE | | | | |
|---|---|---|---|---|---|---|---|---|---|---|
| | | STABILITE DES SUSPENSIONS CACO3 | | APPRECIATION DES SUSPENSIONS 3 SEMAINES | POTENTIEL ZETA 8J mV | 8 JOURS % FLOCULANT | | 3 SEMAINES % FLOCULANT | | |
| | | 8 JOURS | 3 SEMAINES | | | 0,03% | 0,09% | 0,00% | 0,03% | 0,09% |
| 21 | 0,72 | DEPOT DUR | MAUVAIS | 0 | - 8 | 0,18% | 0,10% | 0,23% | 0,10% | 0,05% |
| 22 | 0,72 | LEGER DEPOT | LEGER DEPOT | 3 | - 3 | 0,15% | 0,06% | 0,02% | 0,07% | 0,05% |
| 23 | 0,8 | DEPOT DUR | MAUVAIS | 0 | - 10 | 0,18% | 0,10% | 0,23% | 0,10% | 0,05% |
| 24 | 0,62 | LEGER DEPOT | DEPOT DUR | 1 | - 9 | 0,13% | 0,07% | 0,23% | 0,06% | 0,04% |
| 25 | 0,62 | LEGER DEPOT | LEGER DEPOT | 3 | - 2 | 0,12% | 0,06% | 0,16% | 0,05% | 0,04% |
| 26 | 0,99 | GEL EPAIS | GEL EPAIS | 3 | - 4 | 0,09% | 0,06% | 0,15% | 0,08% | 0,07% |
| 27 | 0,8 | MAUVAIS | MAUVAIS | 0 | - 2 | 0,18% | 0,10% | 0,23% | 0,10% | 0,05% |
| 28 | 0,64 | LEGER DEPOT | DEPOT DUR | 1 | - 5 | 0,05% | 0,03% | 0,16% | 0,07% | 0,03% |
| 29 | 0,51 | EXCELLENT | BON GEL | 4 | - 5 | 0,02% | 0,02% | 0,13% | 0,07% | 0,03% |
| 30 | 0,51 | BON GEL | BON GEL | 4 | - 8 | 0,04% | 0,03% | 0,18% | 0,09% | 0,07% |

APPRECIATION DES SUSPENSIONS DE CACO3 3 SEMAINES :
0 : MAUVAIS 1 : DEPOT DUR 2 : GEL ELASTIQUE 3 : GEL ELASTIQUE
4 : BON GEL 5 : EXCELLENT

TABLEAU 4/2 (suite)

| N° POLY-MERE | n SPE | CARACTERISTIQUES DES SUSPENSIONS DE CACO3 — STABILITE DES SUSPENSIONS CACO3 — 8 JOURS | 3 SEMAINES | APPRECIATION DES SUSPENSIONS 3 SEMAINES | POTENTIEL ZETA 8J mV | TEST DE RETENTION PAPETIERE — 8 JOURS — % FLOCULANT 0,03% | 0,09% | 3 SEMAINES — % FLOCULANT 0,00% | 0,03% | 0,09% |
|---|---|---|---|---|---|---|---|---|---|---|
| 31 | 0,6 | BON GEL | BON GEL | 4 | -10 | 0,09% | 0,06% | 0,15% | 0,08% | 0,07% |
| 32 | 0,51 | LEGER GEL | BON GEL | 4 | -5 | 0,07% | 0,06% | 0,12% | 0,05% | 0,06% |
| 33 | 0,55 | EXCELLENT | EXCELLENT | 5 | -8 | 0,04% | 0,03% | 0,12% | 0,06% | 0,04% |
| 34 | 0,6 | EXCELLENT | EXCELLENT | 5 | -2 | 0,04% | 0,03% | 0,12% | 0,06% | 0,04% |
| 35 | 0,68 | BON GEL | BON GEL | 4 | -10 | 0,09% | 0,06% | 0,15% | 0,08% | 0,07% |
| 36 | 0,68 | BON GEL | BON GEL | 4 | -2 | 0,04% | 0,03% | 0,12% | 0,06% | 0,04% |
| 37 | 0,63 | BON GEL | MOINS BON | 2 | -10 | 0,14% | 0,09% | 0,16% | 0,09% | 0,08% |
| 38 | 0,63 | GEL DUR | MAUVAIS | 0 | -5 | 0,18% | 0,11% | 0,20% | 0,13% | 0,10% |
| 39 | 0,94 | DEPOT DUR | MAUVAIS | 0 | -10 | 0,11% | 0,10% | 0,19% | 0,11% | 0,09% |
| 40 | 0,57 | MAUVAIS | MAUVAIS | 0 | -5 | 0,18% | 0,11% | 0,20% | 0,10% | 0,08% |
| 41 | 0,85 | DEPOT COLLANT | GEL ELASTIQUE | 3 | -15 | 0,11% | 0,11% | 0,14% | 0,06% | 0,06% |

**APPRECIATION DES SUSPENSIONS DE CACO3 3 SEMAINES :**
**0 : MAUVAIS 1 : DEPOT DUR 2 : GEL ELASTIQUE 3 : GEL ELASTIQUE**
**4 : BON GEL 5 : EXCELLENT**

Les résultats consignés dans le tableau 4/2 des essais de stabilité au stockage des suspensions aqueuses

de carbonate de calcium au moyen des divers agents polymères révèlent qu'il est possible d'obtenir une bonne stabilité au stockage des suspensions aqueuses si, pour des copolymères ayant des viscosités spécifiques se situant dans l'intervalle revendiqué, les proportions pondérales en chacun des monomères (A), (B) et (C) sont celles des intervalles revendiqués.

D'autre part, pour ces suspensions aqueuses stables au stockage, le tableau 4/2 permet de constater que les polymères, dont le monomère (C) est quaternisé, et dont les pourcentages pondéraux des différents monomères (A), (B) et (C) sont inclus dans les intervalles revendiqués, donnent simultanément un potentiel zéta compris entre -5mV et +5mV ainsi qu'une bonne rétention papetière.

Exemple 5

Cet exemple vise à illustrer selon l'invention l'influence, dans le monomère éthylénique cationique (C), de l'éloignement du groupement cationique par rapport à la chaîne éthylénique, c'est-à-dire l'influence dans la formule générale du monomère (C) du nombre de radicaux oxyalkylés n séparant le radical $R_8$ du groupement cationique lorsque le radical $R_{10}$, porté par l'atome quaternisable, est une chaîne alkyle ayant 8 à 22 atomes de carbone.

Pour ce faire, l'exemple concerne le broyage d'une suspension aqueuse de carbonate de calcium en présence de l'agent selon l'invention, dans le cas où les trois monomères (A), (B) et (C) sont présents avec une quantité variable de radicaux oxyalkylés dans le monomère (C) comprise dans les intervalles revendiqués.

Ainsi, le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été soumises aux mêmes tests que ceux décrits dans l'exemple 1. Les résultats de ces essais sont consignés dans le tableau 5/2.

TABLEAU 5/1

VARIATION DU NOMBRE D'OXYDE D'ETHYLENE
CHAINE MONOOXYETHYLEE

| N° POLY-MERE | n SPE | COMPOSITION | | | | | | | | | | | | | | | | | |
|---|---|---|---|---|---|---|---|---|---|---|---|---|---|---|---|---|---|---|---|
| | | A | | | | B | | | C | | | | | | | | | | |
| | | R1 | R2 | R3 | p | R4 | R5 | q | R6 | R7 | R8 | R9 | R10 | R11 | R12 | n | r | ATOME QUATER-NISABLE | AGENT DE QUATER-NISATION |
| | | H | H | COONa | 45 | CONH2 | H | 45 | H | CH3 | *** | H | | | H | | 10 | N | |
| 42 | 0,85 | / / | / / | / / | / / | / / | / / | / / | / / | / / | / / | / / | CH3 | CH3 | / / | 1 | / / | / / | NON |
| 43 | 0,57 | / / | / / | / / | / / | / / | / / | / / | / / | / / | / / | / / | C12 | C12 | / / | 5 | / / | / / | OUI |
| 44 | 0,65 | / / | / / | / / | / / | / / | / / | / / | / / | / / | / / | / / | C12 | C12 | / / | 15 | / / | / / | OUI |
| 45 | 0,58 | / / | / / | / / | / / | / / | / / | / / | / / | / / | / / | / / | C12 | C12 | / / | 15 | / / | / / | OUI |
| 28 | 0,64 | / / | / / | / / | / / | / / | / / | / / | / / | / / | / / | / / | C12 | C12 | / / | 10 | / / | / / | NON |
| 26 | 0,99 | / / | / / | / / | / / | / / | / / | / / | / / | / / | / / | / / | C12 | C12 | / / | 10 | / / | / / | OUI |
| 27 | 0,8 | / / | / / | / / | / / | / / | / / | / / | / / | / / | / / | / / | C12 | C12 | / / | 10 | / / | / / | OUI |
| 29 | 0,51 | / / | / / | / / | / / | / / | / / | / / | / / | / / | / / | / / | C12 | C12 | / / | 10 | / / | / / | OUI |
| 46 | 0,68 | / / | / / | / / | / / | / / | / / | / / | / / | / / | / / | / / | C12 | C12 | / / | 20 | / / | / / | OUI |
| 47 | 0,43 | / / | / / | / / | / / | / / | / / | / / | / / | / / | / / | / / | C12 | C12 | / / | 20 | / / | / / | OUI |
| 31 | 0,6 | / / | / / | / / | / / | / / | / / | / / | / / | / / | / / | / / | C12 | C12 | / / | 25 | / / | / / | NON |
| 32 | 0,51 | / / | / / | / / | / / | / / | / / | / / | / / | / / | / / | / / | C12 | C12 | / / | 25 | / / | / / | OUI |

*** R8 = -CO-(O-CH2-CH2)-O-CO-NH-R13-NH-CO AVEC R13 = 2 METHYL BENZYL
* n SPE = VISCOSITE SPECIFIQUE
* NON = NON QUATERNISE
* OUI = QUATERNISE
* C12 = -(CH2)11-CH3
* p,q et r exprimé par rapport à COOH (ETAT ACIDE)

Les agents de broyage référencés dans le tableau 5/1 sont tous des copolymères dont les proportions monomériques pondérales sont p = 45, q = 45, r = 10 avec n = 1 à 25.

Les polymères ont été choisis comme suit polymères nos 26 à 29 avec n = 10 ; polymères nos. 31 et 32 avec n = 25 ; polymère no 42 avec n = 1 ; polymère no 43 avec n = 5 ; polymères nos 44 et 45 avec n = 15 ; polymères nos 46 et 47 avec n = 20.

TABLEAU 5/2

| N° POLYMERE | n SPE | CARACTERISTIQUES DES SUSPENSIONS DE CACO3 — STABILITE DES SUSPENSIONS CACO3 — 8 JOURS | 3 SEMAINES | APPRECIATION DES SUSPENSIONS 3 SEMAINES | POTENTIEL ZETA 8J mV | TEST DE RETENTION PAPETIERE — 8 JOURS — % FLOCULANT 0,03% | 0,09% | 3 SEMAINES — % FLOCULANT 0,00% | 0,03% | 0,09% |
|---|---|---|---|---|---|---|---|---|---|---|
| 42 | 0,85 | DEPOT COLLANT | GEL ELASTIQUE | 1 | -10 | 0,11% | 0,11% | 0,14% | 0,06% | 0,06% |
| 43 | 0,57 | EXCELLENT | EXCELLENT | 5 | -3 | 0,02% | 0,02% | 0,13% | 0,07% | 0,032% |
| 44 | 0,65 | BON GEL | LEGER DEPOT | 4 | -2 | 0,09% | 0,06% | 0,14% | 0,07% | 0,06% |
| 45 | 0,58 | BON GEL | LEGER DEPOT | 4 | -6 | 0,08% | 0,05% | 0,14% | 0,06% | 0,05% |
| 26 | 0,99 | GEL EPAIS | GEL EPAIS | 3 | -4 | 0,09% | 0,06% | 0,15% | 0,08% | 0,07% |
| 27 | 0,8 | MAUVAIS | MAUVAIS | 0 | -2 | 0,18% | 0,10% | 0,23% | 0,10% | 0,05% |
| 28 | 0,64 | LEGER DEPOT | DEPOT DUR | 1 | -5 | 0,05% | 0,03% | 0,16% | 0,07% | 0,03% |
| 29 | 0,51 | EXCELLENT | BON GEL | 4 | -5 | 0,02% | 0,02% | 0,13% | 0,07% | 0,03% |
| 46 | 0,68 | DEPOT COLLANT | LEGER DEPOT | 4 | -3 | 0,09% | 0,10% | 0,15% | 0,08% | 0,07% |
| 47 | 0,43 | DEPOT COLLANT | LEGER DEPOT | 4 | -2 | 0,08% | 0,07% | 0,14% | 0,08% | 0,06% |
| 31 | 0,6 | BON GEL | BON GEL | 4 | -10 | 0,09% | 0,06% | 0,15% | 0,08% | 0,07% |
| 32 | 0,51 | LEGER GEL | BON GEL | 5 | -5 | 0,07% | 0,06% | 0,12% | 0,05% | 0,06% |

APPRECIATION DES SUSPENSIONS DE CACO3 3 SEMAINES :
0 : MAUVAIS 1 : DEPOT DUR 2 : GEL ELASTIQUE 3 : GEL ELASTIQUE
4 : BON GEL 5 : EXCELLENT

Les résultats consignés dans le tableau 5/2 révèlent que, selon l'invention, pour des copolymères ayant des viscosités spécifiques se situant dans l'intervalle revendiqué, des proportions monomériques pondérales

comprises dans le domaine revendiqué et un monomère éthylénique cationique (C) quaternisé, on obtient simultanément une bonne stabilité au repos des suspensions, un potentiel zéta compris entre -5mV et +5mV ainsi qu'une bonne rétention papetière pour un nombre n d'oxyde d'éthylène d'au moins 2.

Exemple 6

Cet exemple, comme le précédent, vise à illustrer, selon l'invention, l'influence dans le monomère éthylénique cationique (C), de l'éloignement du groupement cationique par rapport à la chaîne éthylénique lorsque, à la différence de l'exemple précédent, le radical $R_{10}$ porté par l'atome quaternisable est de formule :

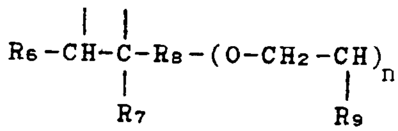

L'exemple concerne le broyage d'une suspension aqueuse de carbonate de calcium en présence de l'agent, selon l'invention, dans le cas où les trois monomères (A), (B) et (C) sont présents avec une quantité variable de radicaux oxyalkylés dans le monomère (C).

Ainsi, le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été soumises aux mêmes tests que ceux décrits dans l'exemple 1. Les résultats de ces essais sont consignés dans le tableau 6/2.

TABLEAU 6/1

VARIATION DU NOMBRE D'OXYDE D'ETHYLENE
CHAINE DIOXYETHYLEE

| N° POLYMERE | n SPE | COMPOSITION A R1 | R2 | R3 | p | B R4 | R5 | q | C R6 | R7 | R8 | R9 | R10 | R11 | R12 | n | r | ATOME QUATERNISABLE | ATOME DE QUATERNISATION |
|---|---|---|---|---|---|---|---|---|---|---|---|---|---|---|---|---|---|---|---|
| | | H | H | COON | [illegible] | CONH2 | H | 45 | H | CH3 | * * * | H | * * * * * | | H | | 10 | N | |
| 48 | 0,57 | // | // | // | // | // | // | // | // | // | // | // | // | C18 | // | 2,5 | // | // | OUI |
| 49 | 0,67 | // | // | // | // | // | // | // | // | // | // | // | // | C18 | // | 5,5 | // | // | OUI |
| 50 | 0,44 | // | // | // | // | // | // | // | // | // | // | // | // | C18 | // | 5,5 | // | // | OUI |
| 51 | 0,68 | // | // | // | // | // | // | // | // | // | // | // | // | C12 | // | 7,5 | // | // | OUI |
| 52 | 0,47 | // | // | // | // | // | // | // | // | // | // | // | // | C12 | // | 7,5 | // | // | OUI |
| 53 | 0,67 | // | // | // | // | // | // | // | // | // | // | // | // | C12 | // | 2,5 | // | // | OUI |
| 54 | 0,6 | // | // | // | // | // | // | // | // | // | // | // | // | C12 | // | 2,5 | // | // | OUI |
| 55 | 0,44 | // | // | // | // | // | // | // | // | // | // | // | // | C12 | // | 5,5 | // | // | OUI |

***** R10 = - CH-C- (R6 on CH, R7 on C; R8-(OE)n)

*** R8 = -CO-(O-CH2-CH2)-O-CO-NH-R13-NH-CO AVEC R13 = 2 METHYL BENZYL

* n SPE = VISCOSITE SPECIFIQUE

* NON = NON QUATERNISE

* OUI = QUATERNISE

* C12 = -(CH2)11-CH3

* p, q et r exprimé par rapport à COOH (ETAT ACIDE)

Les agents de broyage selon l'invention référencés dans le tableau 6/1 sont tous des copolymères dont les proportions monomériques pondérales sont : p = 45, q = 45, r = 10 avec un nombre d'oxyde d'éthylène n

variant de 2,5 à 7,5 et dont les viscosités spécifiques sont comprises dans l'intervalle revendiqué.

TABLEAU 6/2

| N° POLYMERE | n SPE | CARACTERISTIQUES DES SUSPENSIONS DE CACO3 — STABILITE DES SUSPENSIONS CACO3 8 JOURS | 3 SEMAINES | APPRECIATION DES SUSPENSIONS 3 SEMAINES | POTENTIEL ZETA 8J mV | TEST DE RETENTION PAPETIERE — 8 JOURS % FLOCULANT 0,03% | 0,09% | 3 SEMAINES % FLOCULANT 0,00% | 0,03% | 0,09% |
|---|---|---|---|---|---|---|---|---|---|---|
| 48 | 0,57 | EXCELLENT | EXCELLENT | 5 | -2 | 0,03% | 0,03% | 0,14% | 0,06% | 0,06% |
| 49 | 0,67 | LEGER DEPOT | BON GEL | 4 | 0 | 0,04% | 0,05% | 0,18% | 0,04% | 0,04% |
| 50 | 0,44 | LEGER DEPOT | BON GEL | 4 | -3 | 0,04% | 0,06% | 0,20% | 0,06% | 0,05% |
| 51 | 0,68 | BON GEL | PETIT DEPOT | 3 | -3 | 0,01% | 0,02% | 0,17% | 0,07% | 0,15% |
| 52 | 0,47 | EXCELLENT | EXCELLENT | 5 | 2 | 0,052% | 0,18% | 0,13% | 0,05% | 0,05% |
| 53 | 0,67 | EXCELLENT | EXCELLENT | 5 | 4 | 0,05% | 0,08% | 0,13% | 0,04% | 0,06% |
| 54 | 0,6 | EXCELLENT | EXCELLENT | 5 | 0 | 0,05% | 0,07% | 0,12% | 0,04% | 0,05% |
| 55 | 0,44 | PETIT DEPOT | BON GEL | 4 | -1 | 0,06% | 0,06% | 0,02% | 0,07% | 0,10% |

APPRECIATION DES SUSPENSIONS DE CACO3 3 SEMAINES :
0 : MAUVAIS 1 : DEPOT DUR 2 : GEL ELASTIQUE 3 : GEL ELASTIQUE
4 : BON GEL 5 : EXCELLENT

Les résultats consignés dans le tableau 6/2 amènent aux mêmes conclusions que l'exemple précédent.

Exemple 7

Cet exemple illustre, selon l'invention, la possibilité d'utiliser un autre atome quaternisable tel que le soufre. Dans ce but, l'exemple concerne le broyage d'une suspension aqueuse de carbonate de calcium, en présence de l'agent selon l'invention, contenant un atome de soufre quaternisable. Le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été soumises aux mêmes tests que ceux décrits dans l'exemple 1. Les résultats sont consignés dans le tableau 7/2.

VARIATION DU NOMBRE D'OXYDE D'ETHYLENE
CHAINE MONOOXYETHYLEE ATOME QUATERNISABLE : LE SOUFRE

TABLEAU 7/1

| N° POLYMERE | n SPE | COMPOSITION | | | | | | | | | | | | | | | | |
|---|---|---|---|---|---|---|---|---|---|---|---|---|---|---|---|---|---|---|
| | | A | | | | B | | | C | | | | | | | | | |
| | | R1 | R2 | R3 | p | R4 | R5 | q | R6 | R7 | R8 | R9 | R11 | R12 | n | r | ATOME QUATERNISABLE | ATOME DE QUATERNISATION |
| | | H | H | COONa | 45 | CONH2 | H | 45 | H | CH3 | * * * | H | | | | 10 | S | |
| 56 | 0,41 | // | // | // | // | // | // | // | // | // | // | // | C12 | H | 7 | // | // | OUI |
| 57 | 0,64 | // | // | // | // | // | // | // | // | // | // | // | C12 | H | 7 | // | // | OUI |
| 58 | 0,46 | // | // | // | // | // | // | // | // | // | // | // | C12 | H | 11 | // | // | OUI |
| 59 | 0,64 | // | // | // | // | // | // | // | // | // | // | // | C12 | H | 11 | // | // | OUI |
| 60 | 0,41 | // | // | // | // | // | // | // | // | // | // | // | C12 | H | 20 | // | // | OUI |
| 61 | 0,68 | // | // | // | // | // | // | // | // | // | // | // | C12 | H | 20 | // | // | OUI |

*** R8 = -CO-(O-CH2-CH2)-O-CO-NH-R13-NH-CO AVEC R13 = 2 METHYL BENZYL
* n SPE = VISCOSITE SPECIFIQUE
NON = NON QUATERNISE
* OUI = QUATERNISE
* C12 = -(CH2)11-CH3
* p, q et r exprimé par rapport à COOH (ETAT ACIDE)

Les agents de broyage selon l'invention référencés dans le tableau 7/1 sont tous des copolymères dont les proportions monomériques pondérales sont p = 45, q = 45, r = 10 avec un nombre d'oxyde d'éthylène n variant de 7 à 20 et dont les viscosités spécifiques sont comprises dans l'intervalle revendiqué et dont le monomère cationique (C) contient un atome de soufre quaternisable.

TABLEAU 7/2

| N° POLY-MERE | n SPE | CARACTERISTIQUES DES SUSPENSIONS DE CACO3 | | | | TEST DE RETENTION PAPETIERE | | | | |
|---|---|---|---|---|---|---|---|---|---|---|
| | | STABILITE DES SUSPENSIONS CACO3 | | APPRECIATION DES SUSPENSIONS 3 SEMAINES | POTENTIEL ZETA 8J mV | 8 JOURS | | 3 SEMAINES | | |
| | | 8 JOURS | 3 SEMAINES | | | % FLOCULANT | | % FLOCULANT | | |
| | | | | | | 0,03% | 0,09% | 0,00% | 0,03% | 0,09% |
| 56 | 0,41 | EXCELLENT | PETIT DEPOT | 4 | - 2 | 0,05% | 0,08% | 0,18% | 0,07% | 0,06% |
| 57 | 0,64 | EXCELLENT | EXCELLENT | 5 | - 5 | 0,05% | 0,06% | 0,15% | 0,06% | 0,04% |
| 58 | 0,46 | EXCELLENT | EXCELLENT | 5 | - 2 | 0,06% | 0,03% | 0,14% | 0,05% | 0,06% |
| 59 | 0,64 | EXCELLENT | EXCELLENT | 5 | - 3 | 0,05% | 0,04% | 0,15% | 0,06% | 0,05% |
| 60 | 0,41 | EXCELLENT | EXCELLENT | 5 | - 4 | 0,06% | 0,06% | 0,18% | 0,09% | 0,05% |
| 61 | 0,68 | EXCELLENT | EXCELLENT | 5 | - 2 | 0,05% | 0,04% | 0,15% | 0,06% | 0,04% |

APPRECIATION DES SUSPENSIONS DE CACO3 3 SEMAINES :
0 : MAUVAIS 1 : DEPOT DUR 2 : GEL ELASTIQUE 3 : GEL ELASTIQUE
4 : BON GEL 5 : EXCELLENT

On constate à la lecture du tableau 7/2 qu'il est possible d'obtenir d'aussi bons résultats avec un autre atome quaternisable tel que le soufre.

Exemple 8

Cet exemple illustre, selon l'invention, la possibilité de déliter en phase aqueuse d'autres charges minérales telles que, par exemple, le talc, le kaolin et l'hydroxyde de magnésium.

Pour ces essais, la méthode de délitage consiste à réaliser à une température ambiante sous agitation la préparation d'une suspension aqueuse de charge minérale en introduisant d'abord tout ou partie de l'agent selon l'invention dans la phase aqueuse, puis le matériau minéral, de manière à obtenir une suspension fluide et souhaitablement homogène.

Au terme du délitage, les viscosités Brookfield des suspensions ont été mesurées en millipascals seconde au moyen d'un viscosimètre Brookfield type RVT de la société BECKMANN (USA) à 10 et 100 tours par minute.

Afin de pouvoir établir une comparaison par rapport à l'art antérieur, il a été réalisé une suspension de chacune des charges au moyen d'un agent selon l'art antérieur.

Toutes les caractéristiques des essais, à savoir celles de l'agent de dispersion (nature, quantité introduite) et celles des suspensions aqueuses (teneur en matière sèche) sont rassemblées dans le tableau 8 ci-après.

| | SUSPENSION DE KAOLIN | | | |
|---|---|---|---|---|
| TYPE D'AGENT | POLYACRYLATE DE SODIUM | | COPOLYMERE N° 54 | |
| CONCENTRATION DE LA SUSPENSION % | 7 0% | | 7 0% | |
| % DISPERSANT | 0,3 4% | | 0,3 4% | |
| VISCOSITE BROOKFIEFD DES SUSPENSIONS mPa.s | 10T/mn | 100T/mn | 10T/mn | 100T/mn |
| | 5600 | 1500 | 2000 | 300 |

| | HYDROXYDE DE MAGNESIUM | | | |
|---|---|---|---|---|
| TYPE D'AGENT | COPOLYMERE ACRYLIQUE | | COPOLYMERE N° 54 | |
| CONCENTRATION DE LA SUSPENSION % | 7 0% | | 7 0% | |
| % DISPERSANT | 0,5 0% | | 0,5 0% | |
| VISCOSITE BROOKFIEFD DES SUSPENSIONS mPa.s | 10T/mn | 100T/mn | 10T/mn | 100T/mn |
| | 26000 | 3600 | 2800 | 680 |

| | FINNTALC | | | |
|---|---|---|---|---|
| TYPE D'AGENT | POLYACRYLATE DE SODIUM | | COPOLYMERE N° 54 | |
| CONCENTRATION DE LA SUSPENSION % | 6 0% | | 6 0% | |
| % DISPERSANT | 0,5 0% | | 0,5 0% | |
| VISCOSITE BROOKFIEFD DES SUSPENSIONS mPa.s | 10T/mn | 100T/mn | 10T/mn | 100T/mn |
| | 2400 | 960 | 2600 | 560 |

TABLEAU 8

La lecture de ce tableau révèle que, dans tous les cas, les suspensions de charge obtenues au moyen de l'agent selon l'invention ont une viscosité Brookfield plus faible que celles obtenues au moyen de l'agent selon l'art antérieur.

Exemple 9

Cet exemple illustre la préparation de sauces de couchage destinées à l'enduction du papier, préparées selon des procédés connus et faisant appel à des agents de dispersion et/ou de broyage selon l'invention.

Chaque sauce de couchage contenait en partie en poids :

Suspension aqueuse à 73% en matière sèche de carbonate de calcium ayant au moins 30% des particules inférieures à 1 micromètre..............100

Amisol 5591 (commercialisé par DOITEAU)..................5,0

Latex styrène acrylique SD 215 (commercialisé par Rhône-Poulenc).......................5,0

Glyoxal..........................................0,3

La concentration en matière sèche était de 62%.

Le tableau 9 ci-après rassemble les caractéristiques d'une sauce de couchage obtenue au moyen d'un agent selon l'invention (polymère n° 54) comparativement à celle obtenue au moyen d'un agent de l'art antérieur.

TABLEAU 9

| | | SAUCE DE COUCHAGE | | | |
|---|---|---|---|---|---|
| | | VISCOSITE mPa.s | | | MS |
| TYPE DE SUSPENSION CACO3 | % DISPERSANT MIS EN OEUVRE | 10T * | 100T * | HAUT CISAILLEMENT ** 750 000 S-1 | % |
| SUSPENSION CACO3 BROYEE AVEC UN POLYACRYLATE DE SODIUM | 0,2 % | 1000 | 320 | 110 | 62 |
| SUSPENSION CACO3 BROYEE AVEC UN COPOLYMERE N° 54 | 0,2 % | 950 | 310 | 105 | 62 |

* BROOKFIELD RVT BECKMAN

** HV6 DE CONTRAVES

A la lecture des résultats du tableau ci-dessus, on constate que les caractéristiques rhéologiques des sauces sont similaires.

Exemple 10

Cet exemple a pour but d'illustrer le gain de brillance spéculaire d'une sauce de couchage obtenue au

moyen d'un agent selon l'invention.

On a tout d'abord effectué deux broyages de carbonate de calcium provenant du gisement d'Omey (France) selon le même mode opératoire que l'exemple 1.

Le premier broyage, effectué en présence de 0,28% en poids de matière sèche du polymère n° 1 de l'art antérieur, nous a conduit à la suspension aqueuse (A) ayant 73% de matière sèche de carbonate de calcium dont au moins 80% des particules sont inférieures à 2 micromètres.

De même, le deuxième broyage, effectué en présence de 0,28% en poids de matière sèche du polymère n° 55 selon l'invention, nous a conduit à la suspension aqueuse (B) ayant également 73% de matière sèche de carbonate de calcium, dont au moins 80% des particules sont inférieures à 2 micromètres.

**Préparation des sauces de couchage**

On a alors préparé selon des procédés connus quatre sauces de couchage, dont la composition, en parties en poids, figure dans le tableau suivant :

| | ART ANTERIEUR | | INVENTION | |
|---|---|---|---|---|
| SAUCE N° | 1 | 2 | 3 | 4 |
| Suspension (A) Art Antérieur | 100 | 90 | 0 | 0 |
| Suspension (B) Invention | 0 | 0 | 100 | 90 |
| $TiO_2$* | 0 | 10 | 0 | 10 |
| Acronal S 360 D** | 10,5 | 10,5 | 10,5 | 10,5 |
| Finnfix 5*** | 0,5 | 0,5 | 0,5 | 0,5 |
| pH | 8,5 - 9 | 8,5 - 9 | 8,5 - 9 | 8,5 - 9 |
| Concentration en matière sèche | 68 % | 68 % | 68 % | 68 % |

* : Oxyde de titane commercialisé sous le nom de AT1 par la société THANN et MULHOUSE

**: Latex styrène - acrylique commercialisé par la société BASF.

*** : Carboxyméthylcellulose commercialisé par la société METSA - SERLA.

**Mesure de la brillance**

On a appliqué une couche humide de 50 micromètres de chacune des sauces de couchage précédentes sur une plaque de marbre noir. Puis, après un séchage de ces plaques pendant 5 minutes à 50°C, on a mesuré la brillance à l'aide du brillancemètre MICRO-TRI-GLOSS, commercialisé par la société BYK, et on a obtenu les résultats suivants :

| | Art antérieur | | Invention | |
|---|---|---|---|---|
| Sauce n° | 1 | 2 | 3 | 4 |
| Brillance à 85° | 55,9 | 49,1 | 58,1 | 49,7 |

La lecture du tableau ci-dessus nous permet de constater un gain de brillance pour les sauces de couchage obtenues au moyen d'un agent selon l'invention.

II Exemples relatifs aux domaines des peintures et des plastiques.

Exemple 11

Cet exemple décrit la préparation par broyage des suspensions utilisées dans les exemples 12 et 14.

Il a été réalisé trois broyages de carbonate de calcium provenant du gisement d'Orgon (France).

Broyage n° 1 : même mode opératoire que l'exemple 1, mais sans agent de broyage et à la concentration en matière sèche de 25% (si on augmente la concentration, il devient impossible de broyer à cause de la forte élévation de la viscosité);

Broyage n° 2 : même mode opératoire que l'exemple 1 mais avec le polymère n° 1 selon l'art antérieur.

Broyage n° 3 : même mode opératoire que l'exemple 1, mais avec le polymère n° 55 selon l'invention.

Chaque suspension de carbonate, obtenue par ces broyages, a été séchée au moyen d'un atomiseur LEA, commercialisé par la société VICARB dans les conditions suivantes :

| | Suspension N°1 | Suspension N°2 | Suspension N°3 |
|---|---|---|---|
| Débit de gaz en m3/h | 450 | 250 | 250 |
| Débit suspension m3/h | 5,2 | 4 | 4 |
| Conc. suspension en% | 20 | 70 | 70 |
| Température sortie °C | 150 | 150 | 150 |
| m3 de gaz/tonne de poudre | 320 | 120 | 120 |

Notes :

La suspension n° 1 correspond au broyage n° 1.

La suspension n° 2 correspond au broyage n° 2.

La suspension n° 3 correspond au broyage n° 3.

Les caractéristiques granulométriques obtenues au granulomètre SEDIGRAPH 5100, commercialisé par la société MICROMERITICS, des suspensions aqueuses et des poudres correspondantes, sont résumées dans le tableau suivant :

TABLEAU 10

| N° POLYMERE | N° BROYAGE | CARACTERISTIQUE SUSPENSION | | | CARACTERISTIQUE APRES SECHAGE | |
|---|---|---|---|---|---|---|
| | | MS % | GRANULOMETRIE | | GRANULOMETRIE | |
| | | | % < 2 µ | % < 1 µ | % < 2 µ | % < 1 µ |
| | 1 | 20 | 90 | 50 | 81 | 43 |
| 1 | 2 | 75 | 90 | 60 | 77 | 45 |
| 55 | 3 | 65 | 89 | 54 | 89 | 54 |

Avec chacune de ces poudres de carbonate de calcium, il a été réalisé diverses applications dans les domaines des peintures et des plastiques.

Exemple 12 : Peintures glycérophtaliques

**1. Réalisation des peintures**

Les matières premières sont introduites dans l'ordre indiqué dans la partie "formule" du tableau 11 qui suit (dans ce tableau, seuls changent les agents de broyage utilisés ou non au cours de l'étape de broyage). L'état de dispersion est vérifié à la jauge NORTH, en fin de dispersion.

**2. Mesure de brillance**

Les peintures sont appliquées sur carte contraste LENETA à la cale à 150 micromètres, en trois fois : quelques jours après la fabrication, 1 mois, puis 3 mois après la fabrication.

Des mesures de brillance sont réalisées au cours du mois suivant l'application à l'aide du brillancemètre MICRO-TRI-GLOSS (BYK).

Les résultats sont consignés dans le tableau 11 qui suit.

TABLEAU 11

| FORMULE PEINTURE GLYCEROPHTALIQUE | ART 2 | ANTERIEUR 1 | INVENTION 3 |
|---|---|---|---|
| SYNOLAC 6868WC75 (CRAY VALLEY) | 240 | 240 | 240 |
| BORCHIGET PASTE UZ (BORCHERS) | 2,98 | 2,98 | 2,98 |
| BYK 052 (BYK) | 0,6 | 0,6 | 0,6 |
| TiO2 RL68 (THANN MULHOUSE) | 189,7 | 189,7 | 189,7 |
| CaCO3 POUDRE 2 | 299,5 | * | * |
| CaCO3 POUDRE 1 | * | 299,5 | * |
| CaCO3 POUDRE 3 | * | * | 299,5 |
| SYNOLAC 6868WC75 (CRAY VALLEY) | 187,5 | 187,5 | 187,5 |
| OCTA SOLIGEN Pb ( BORCHERS) | 4,47 | 4,47 | 4,47 |
| OCTA SOLIGEN Co (BORCHERS) | 2,24 | 2,24 | 2,24 |
| OCTA SOLIGEN Ca ( BORCHERS) | 1,9 | 1,9 | 1,9 |
| MECO (BORCHERS) | 2,24 | 2,24 | 2,24 |
| WHITE SPIRIT | 69,55 | 69,55 | 69,55 |
| BYK 052 (BYK) | 1,4 | 1,4 | 1,4 |
| JAUGE NORTH EMPATAGE | 5 | 6 | 10 |
| | | | |
| BRILLANCE 48 HEURES | | | |
| 20° NOIR | 61,7 | 65,2 | 67 |
| BLANC | 61,5 | 63,8 | 69,2 |
| 60° NOIR | 82,2 | 83,6 | 83,9 |
| BLANC | 82,3 | 82,4 | 83,8 |
| 85° NOIR | 95,8 | 98 | 98,6 |
| BLANC | 95 | 98 | 98,2 |
| BRILLANCE 8 JOURS | | | |
| 20° NOIR | 35,6 | 49,1 | 52,4 |
| BLANC | 37,1 | 42,6 | 55,4 |
| 60° NOIR | 70,7 | 76,5 | 78,5 |
| BLANC | 71,3 | 73,4 | 79,3 |
| 85° NOIR | 93,5 | 95,8 | 97,7 |
| BLANC | 95,2 | 95 | 98 |
| BRILLANCE 2 SEMAINES | | | |
| 20° NOIR | 27,8 | 41,1 | 47,2 |
| BLANC | 27,8 | 34,8 | 49,9 |
| 60° NOIR | 65,7 | 73 | 76 |
| BLANC | 66,1 | 69,5 | 76,9 |
| 85° NOIR | 90,5 | 94,8 | 97,7 |
| BLANC | 92,9 | 94,6 | 96,1 |
| BRILLANCE 3 SEMAINES | | | |
| 20° NOIR | 22 | 34,6 | 41,4 |
| BLANC | 21,7 | 28,9 | 43,5 |
| 60° NOIR | 61,8 | 69,6 | 73 |
| BLANC | 61,5 | 62,2 | 73,8 |
| 85° NOIR | 93,9 | 94 | 96,1 |
| BLANC | 91,3 | 94,4 | 94,5 |
| BRILLANCE 4 SEMAINES | | | |
| 20° NOIR | 18,2 | 30,4 | 37,8 |
| BLANC | 19,1 | 25,5 | 40,6 |
| 60° NOIR | 58,6 | 67,2 | 71,4 |
| BLANC | 59,3 | 64,1 | 72,4 |
| 85° NOIR | 90,2 | 93 | 96,5 |
| BLANC | 91,1 | 92,5 | 94,6 |

TABLEAU 11 (suite)

| APPLICATION UN MOIS APRES LA FABRICATION | | | |
|---|---|---|---|
| | 2 | 1 | 3 |
| BRILLANCE 48 HEURES | | | |
| 20° NOIR | 68,7 | 68,8 | 69,3 |
| BLANC | 67,5 | 67,6 | 68,9 |
| 60° NOIR | 84,7 | 83,4 | 85,2 |
| BLANC | 84 | 81,5 | 84,9 |
| 85° NOIR | 98 | 96,4 | 98,2 |
| BLANC | 96,3 | 95,3 | 97,5 |
| BRILLANCE 8 JOURS | | | |
| 20° NOIR | 49,5 | 54,1 | 58,9 |
| BLANC | 47,9 | 53 | 60,1 |
| 60° NOIR | 77,5 | 78,2 | 78,9 |
| BLANC | 76,9 | 76,7 | 78,8 |
| 85° NOIR | 93,4 | 94 | 94,5 |
| BLANC | 92,8 | 93,2 | 94,3 |
| BRILLANCE 4 SEMAINES | | | |
| 20° NOIR | 30,6 | 38,7 | 46,8 |
| BLANC | 29,6 | 37,7 | 47,4 |
| 60° NOIR | 68,5 | 71,6 | 74,5 |
| BLANC | 67,5 | 70,8 | 71,8 |
| 85° NOIR | 94,3 | 96,2 | 97,1 |
| BLANC | 92 | 95,1 | 96,3 |

| APPLICATION 3 MOIS APRES LA FABRICATION | | | |
|---|---|---|---|
| | 2 | 1 | 3 |
| BRILLANCE 3 JOURS | | | |
| 20° NOIR | 55,4 | 55,6 | 63,7 |
| BLANC | 52,6 | 54,7 | 63,7 |
| 60° NOIR | 80,6 | 80,0 | 82 |
| BLANC | 79,6 | 79,4 | 81,8 |
| 85° NOIR | 97,2 | 97,3 | 97,7 |
| BLANC | 96,2 | 97,8 | 97,9 |
| BRILLANCE 1 SEMAINE | | | |
| 20° NOIR | 40,9 | 43,1 | 55,9 |
| BLANC | 38,3 | 43,5 | 55,7 |
| 60° NOIR | 73,4 | 74,2 | 79,2 |
| BLANC | 72,4 | 74,3 | 79,2 |
| 85° NOIR | 95,6 | 95,5 | 96,8 |
| BLANC | 93,5 | 95,4 | 97,1 |
| BRILLANCE 4 SEMAINES | | | |
| 20° NOIR | 29,9 | 33,8 | 47,1 |
| BLANC | 26,4 | 33,1 | 46,9 |
| 60° NOIR | 67,4 | 69,8 | 76,0 |
| BLANC | 65,4 | 69,2 | 76,0 |
| 85° NOIR | 93,8 | 94,4 | 95,6 |
| BLANC | 93,8 | 92,8 | 96,5 |

### 3. Conclusion

On peut constater que, dans tous les cas, les brillances, sur fond blanc ou noir, sont nettement supérieures pour les formules réalisées avec le carbonate de calcium broyé au moyen de l'agent selon l'invention, c'est-à-dire la poudre n° 3.

Exemple 13 : Peintures aqueuses

Cet exemple décrit la réalisation de peintures aqueuses et permet d'apprécier le gain de brillance obtenu par l'utilisation de l'agent selon l'invention.

**1. Réalisation des peintures**

Les matières premières sont introduites dans l'ordre indiqué dans la partie "formule" du tableau 12 qui suit (dans ce tableau, seuls changent les agents de dispersion utilisés).

**2. Mesure de brillance**

Les peintures sont appliquées sur plaque de verre à la cale à 150 micromètres, quelques jours après la fabrication, après séchage à 23°C ± 1 et 50% ± 5% d'humidité relative. Des mesures de brillance spéculaire sont réalisées 3 jours après l'application à l'aide du MICRO-TRI-GLOSS de BYK.

Les résultats sont consignés dans le tableau 12 qui suit.

TABLEAU 12

| FORMULE PEINTURE AQUEUSE | | ART ANTERIEUR | INVENTION |
|---|---|---|---|
| EAU | | 32 | 32 |
| PROPYLENE GLYCOL | | 24,5 | 24,5 |
| POLYMERE 1 | | 4 | 0 |
| POLYMERE 55 | | 0 | 4 |
| MERGAL K6N (RIEDEL DE HAEN) | | 2 | 2 |
| NEOCRYL AP 2860 (ICI RESINS) | | 1 | 1 |
| AMMONIAQUE à 27% | | 0 | 0,5 |
| TIO2 RHD2 (TIOXIDE) | | 232 | 232 |
| NEOCRYL XK 70 (ICI RESINS) | | 585 | 585 |
| BUTYLDIGLYCOL | | 31 | 31 |
| METHOXY BUTANOL (HOECHST) | | 33 | 33 |
| CEMULSOL NP 30 à 50% (R.P) | | 3,1 | 3,1 |
| BR100 à 10% (COATEX) | | 78 | 78 |
| AMMONIAQUE à 27% | | 0 | 0 |
| NEOCRYL AP2860 (ICI RESINS) | | 2 | 2 |
| TOTAL en grammes | | 1027,6 | 1028,1 |
| PH | | 8,7 | 8,8 |
| VISCOSITE BROOKFIELD RVT (mPa.s) | | | |
| 10T/Mn /100T/Mn T=0 | | 1600/1160 | 1600/1100 |
| 10T/Mn / 100T/Mn à T=24H | | 2000/1600 | 2000/1560 |
| BRILLANCE SPECULAIRE | | | |
| aprés 72H | 20° | 50 | 64,7 |
| | 60° | 80 | 87,2 |
| | 85° | 93 | 97,8 |

**Polymère 1 matière sèche = 40 %**
**Polymère 55 matière sèche = 40 %**

**3. Conclusion**

On peut constater que, dans tous les cas, les brillances sont nettement supérieures pour la formule réalisée au moyen de l'agent selon l'invention, c'est-à-dire le polymère 55.

Exemple 14 : Plastiques

Pour des raisons économiques, et dans le but d'améliorer les propriétés mécaniques des compositions thermodurcissables et thermoplastiques, l'utilisateur cherche à augmenter la quantité de charges, sans modifier la rhéologie du système. Cet exemple décrit la réalisation d'une composition thermodurcissable et permet d'apprécier la baisse de viscosité Brookfield obtenue par l'utilisation de l'agent selon l'invention.

**1. Réalisation de la composition**

Par exemple, on mélange dans un pot en verre de 500 ml, avec un agitateur GRENIER-CHARVET, 300 grammes d'une résine polyester insaturé, distribuée par la société STRAND GLASS sous la dénomination 191 LV, et 150 grammes de carbonate de calcium (poudre n° 2 et n° 3, respectivement).

**2. Mesure de la rhéologie**

On maintient la composition à 23° C pendant 3 heures, puis on mesure à l'aide du viscosimètre BROOKFIELD type RVT les viscosités Brookfield des compositions obtenues, sous différents taux de cisaillement. Les résultats figurent dans le tableau suivant :

| | ART ANTERIEUR | INVENTION |
|---|---|---|
| Résine polyester | 191LV | 191LV |
| Carbonate de calcium | Poudre N°2 | Poudre N°3 |
| Viscosité (mPa.s) | | |
| 10T/mn (module 3) | 2700 | 2400 |
| 100T/mn (module 5) | 2320 | 2000 |

**3. Conclusion**

On constate une baisse de la viscosité du mélange fait avec le carbonate broyé à l'aide de l'agent selon l'invention (poudre n° 3).

**Revendications**

1. Agent amphotère, hydrosoluble, pour le broyage et/ou la dispersion en phase aqueuse de pigments et/ou de charges minérales conduisant à l'obtention de suspensions concentrées, affinées, stables dans le temps, à potentiel zéta proche de 0, caractérisé en ce qu'il est un copolymère ayant une viscosité spécifique comprise entre 0,35 et 0,75, de formule :

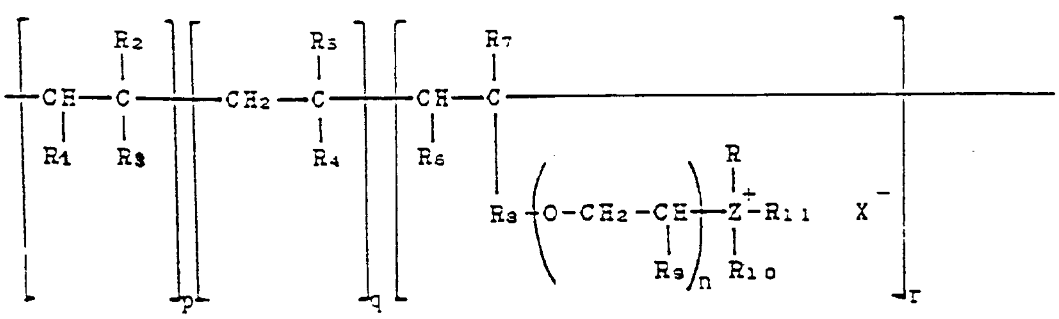

symbolisée par la forme générale :

$$-(A)_p-(B)_q-(C)_r$$

dans laquelle le motif (A) est un monomère éthylénique anionique à fonction carboxylique, le motif (B) est un monomère éthylénique non ionique, le motif (C) est un monomère éthylénique cationique comprenant au moins deux groupements oxyalkylés, et dans laquelle, bornes incluses :

a) p prend une valeur comprise entre 35% et 65% en poids par rapport à la masse totale en monomères,
b) q prend une valeur comprise entre 20% et 60% en poids par rapport à la masse totale en monomères,
c) r prend une valeur comprise entre 5% et 20% en poids par rapport à la masse totale en monomères,
d) avec p + q + r = 100% de la masse totale en monomères ;

dans le motif (A) de type anionique :

- $R_1$ est H ou un radical carboxylique ou ester,
- $R_2$ est H ou un radical alkyle ayant 1 à 3 atomes de carbone,
- $R_3$ est un groupement comportant au moins une fonction acide, au moins partiellement salifiée ;
  dans le motif (B) de type non ionique :
- $R_4$ est $-CO-NH_2$, $-CO-OR_4'$, $-CO-NR_4''R_4'''$, -CN, $CH_3-CO-O-$ ou

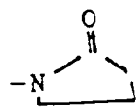

  où :
  - $R_4'$ est un radical alkyle ou oxyalkyle ayant 1 à 4 atomes de carbone,
  - $R_4''$ est H ou un radical alkyle ayant 1 à 4 atomes de carbone,
  - $R_4'''$ est un radical alkyle ayant 1 à 4 atomes de carbone, et
- $R_5$ est H ou un radical alkyle ayant 1 à 4 atomes de carbone ;

dans le motif (C) de type cationique :

- R est un radical alkyle ayant 1 à 4 atomes de carbone,
- X est un contre-ion sulfate ou halogène,
- Z est N ou S,
- n = 2 à 30,
- $R_6$ est H ou un radical carboxylique,
- $R_7$ est H, un radical alkyle ayant 1 à 3 atomes de carbone ou un radical carboxylique,
- $R_8$ est un radical aryle, ou aryl-alkyle ou alkyl-aryle ayant chacun 1 à 6 atomes de carbone dans le radical alkyle, ou ester ou amide substitué, ou un radical $-CH_2-$ ou uréthane de formule générale :

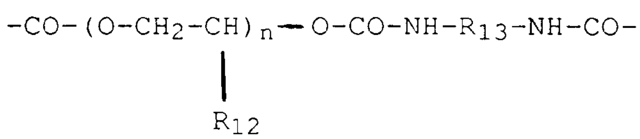

  dans laquelle :
  - $R_{12}$ est H ou $CH_3$,
  - $R_{13}$ est un radical alkyle ou aryle, et
  - n = 2 à 30 ; et
- $R_9$ est H ou $CH_3$ ;
  lorsque Z est N :
- $R_{10}$ est une chaîne alkyle ayant 8 à 22 atomes de carbone, ou un motif de formule :

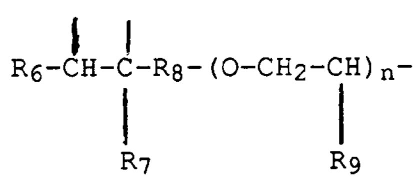

  avec n = 2 à 30, et
  lorsque Z est S :

- $R_{10}$ n'existe pas ; et
- $R_{11}$ est une chaîne alkyle ayant 8 à 22 atomes de carbone.

2. Agent selon la revendication 1, caractérisé en ce que, par rapport à la masse totale en monomères, p prend une valeur comprise entre 40% et 60% en poids, q prend une valeur comprise entre 25% et 55% en poids et r prend une valeur comprise entre 5% et 15% en poids.

3. Agent selon la revendication 1 ou 2, caractérisé en ce qu'il est choisi parmi les copolymères ayant une viscosité spécifique comprise entre 0,40 et 0,70.

4. Utilisation de l'agent selon l'une quelconque des revendications 1 à 3 dans la préparation de suspensions aqueuses de pigments et/ou de matériaux minéraux par broyage et/ou dispersion, à raison de 0,05 % à 2% en poids de matières sèches, par rapport au poids sec des matériaux dispersés.

5. Utilisation selon la revendication 4, caractérisée en ce que l'agent selon l'une quelconque des revendications 1 à 3 est utilisé à raison de 0,1 à 1% en poids de matières sèches, par rapport au poids sec des matériaux dispersés.

6. Suspensions aqueuses de pigments et/ou de charges minérales dont le potentiel zéta est voisin de zéro, caractérisées en ce qu'elles contiennent au moins un agent amphotère, hydrosoluble, de broyage et/ou de dispersion selon l'une quelconque de revendications 1 à 3.

7. Application d'au moins un agent selon l'une quelconque des revendications 1 à 3 au domaine papetier.

8. Application d'au moins un agent selon l'une quelconque des revendications 1 à 3 au domaine des peintures.

9. Application d'au moins un agent selon l'une quelconque des revendications 1 à 3 au domaine des matières plastiques.

## Patentansprüche

1. Amphoteres, wasserlösliches Mittel zum Mahlen und/oder Dispergieren von Pigmenten und/oder mineralischen Zusätzen in wäßriger Phase, welches zum Erhalt von konzentrierten, verfeinerten, über die Zeit stabilen Suspensionen mit einem zeta-Potential nahe 0 führt, dadurch gekennzeichnet, daß es ein Copolymer mit einer spezifischen Viskosität eingeschlossen zwischen 0,35 und 0,75 der Formel

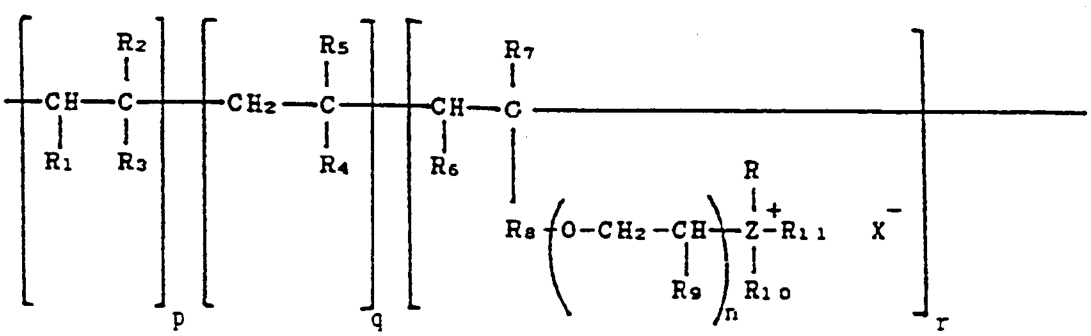

ist, symbolisiert durch die allgemeine Form:

$$-(A)_p-(B)_q-(C)_r$$

in der die Einheit (A) ein anionisches ethylenisches Monomer mit Carboxyl-Funktion ist, die Einheit (B) ein nicht-ionisches ethylenisches Monomer ist, die Einheit (C) ein kationisches ethylenisches Monomer ist, das mindestens zwei oxyalkylierte Gruppen umfaßt, und in der, Grenzwerte eingeschlossen:

a) p einen Wert eingeschlossen zwischen 35 und 65 Gew.-%, bezogen auf die Gesamtmasse der Monomeren, annimmt,

b) q einen Wert eingeschlossen zwischen 20 und 60 Gew.-%, bezogen auf die Gesamtmasse der Monomeren, annimmt,

c) r einen Wert eingeschlossen zwischen 5 und 20 Gew.-%, bezogen auf die Gesamtmasse der Monomeren, annimmt,

d) mit p + q + r = 100% der Gesamtmasse der Monomeren;

in der Einheit (A) vom anionischen Typ:

- $R_1$ H oder ein Carboxyl- oder Esterrest ist,
- $R_2$ H oder ein Alkylrest mit 1 bis 3 Kohlenstoffatomen ist,
- $R_3$ eine Gruppe ist, die mindestens eine Säurefunktion, mindestens teilweise in Salzform vorliegend, umfaßt; in der Einheit (B) vom nicht-ionischen Typ:
- $R_4$ -CO-$NH_2$, -CO-$OR_4$', -CO-$NR_4$"$R_4$"', -CN, $CH_3$-CO-O- oder

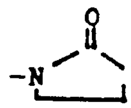

ist, worin:

  - $R_4$' ein Alkyl- oder Oxyalkylrest mit 1 bis 4 Kohlenstoffatomen ist,
  - $R_4$" H oder ein Alkylrest mit 1 bis 4 Kohlenstoffatomen ist,
  - $R_4$"' ein Alkylrest mit 1 bis 4 Kohlenstoffatomen ist und
- $R_5$ H oder ein Alkylrest mit 1 bis 4 Kohlenstoffatomen ist;

in der Einheit (C) vom kationischen Typ:

- R ein Alkylrest mit 1 bis 4 Kohlenstoffatomen ist,
- X ein Sulfat- oder Halogen-Gegenion ist,
- Z N oder S ist,
- n = 2 bis 30 ist,
- $R_6$ H oder ein Carboxylrest ist,
- $R_7$ H, ein Alkylrest mit 1 bis 3 Kohlenstoffatomen oder ein Carboxylrest ist,
- $R_8$ ein Aryl- oder Arylalkyl- oder Alkylarylrest mit jeweils 1 bis 6 Kohlenstoffatomen im Alkylrest, oder ein Ester- oder substituierter Amidrest oder ein Rest -$CH_2$- oder ein Urethanrest der allgemeinen Formel:

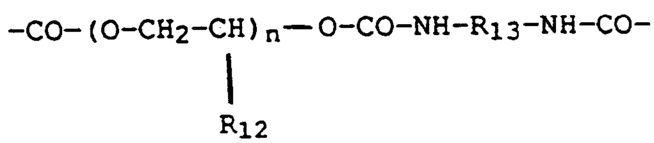

ist, in der

  - $R_{12}$ H oder $CH_3$ ist,
  - $R_{13}$ ein Alkyl- oder Arylrest ist und
  - n = 2 bis 30; und
- $R_9$ H oder $CH_3$ ist;

wenn Z N ist:

- $R_{10}$ eine Alkylkette mit 8 bis 22 Kohlenstoffatomen oder eine Einheit der Formel:

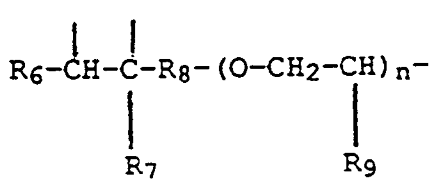

mit n = 2 bis 30 ist, und

wenn Z S ist:

- $R_{10}$ nicht vorhanden ist; und
- $R_{11}$ eine Alkylkette mit 8 bis 22 Kohlenstoffatomen ist.

2. Mittel nach Anspruch 1, dadurch gekennzeichnet, daß, bezogen auf die Gesamtmasse der Monomeren, p einen Wert eingeschlossen zwischen 40 und 60 Gew.-% annimmt, q einen Wert eingeschlossen zwischen 25 und 55 Gew.-% annimmt und r einen Wert eingeschlossen zwischen 5 und 15 Gew.-% annimmt.

3. Mittel nach Anspruch 1 oder 2, dadurch gekennzeichnet, daß es ausgewählt ist unter den Copolymeren mit einer spezifischen Viskosität, die zwischen 0,40 und 0,70 eingeschlossen ist.

4. Verwendung des Mittels nach irgendeinem der Ansprüche 1 bis 3 bei der Herstellung von wäßrigen Suspensionen von Pigmenten und/oder mineralischen Materialien durch Mahlen und/oder Dispergieren, zu einem Anteil von 0,05 bis 2 Gew.-% an trockenen Stoffen, bezogen auf das Trockengewicht der dispergierten Materialien.

5. Verwendung nach Anspruch 4, dadurch gekennzeichnet, daß das Mittel nach irgendeinem derAnsprüche 1 bis 3 zu einem Anteil von 0,1 bis 1 Gew.-% an trockenen Stoffen, bezogen auf das Trockengewicht der dispergierten Materialien, verwendet wird.

6. Wäßrige Suspensionen von Pigmenten und/oder mineralischen Zusätzen, deren zeta-Potential nahe Null ist, dadurch gekennzeichnet, daß sie mindestens ein amphoteres, wasserlösliches Mittel zum Mahlen und/oder Dispergieren nach irgendeinem der Ansprüche 1 bis 3 enthalten.

7. Verwendung von mindestens einem Mittel nach irgendeinem der Ansprüche 1 bis 3 auf dem Gebiet der Papierherstellung.

8. Verwendung von mindestens einem Mittel nach irgendeinem der Ansprüche 1 bis 3 auf dem Gebiet der Anstrichfarben.

9. Verwendung von mindestens einem Mittel nach irgendeinem der Ansprüche 1 bis 3 auf dem Kunststoffgebiet.

## Claims

1. An amphoteric water-soluble agent, for grinding and/or dispersing pigments and/or inorganic fillers in the aqueous phase, leading to the obtention of improved concentrated suspensions that are stable in the time and have a zeta potential close to zero, which agent is a copolymer having a specific viscosity between 0.35 and 0.75 and the following formula :

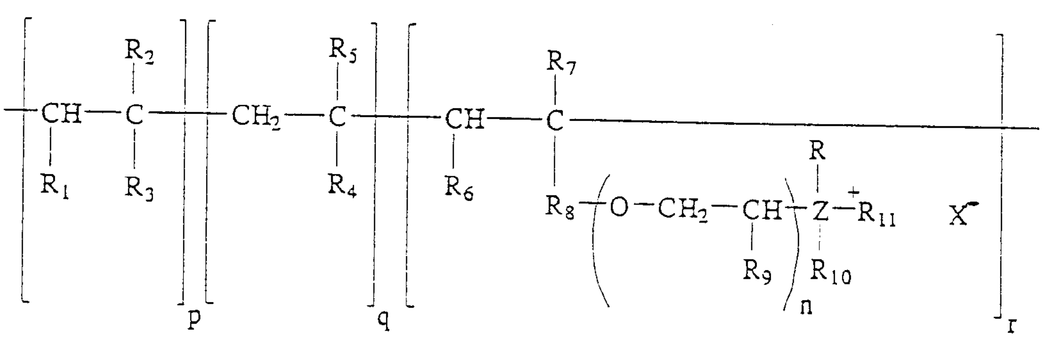

symbolized by the general formula :

$$(A)_p - (B)_q - (C)_r$$

in which group (A) is an anionic ethylenic monomer with carboxyl function, group (B) is a nonionic ethylenic monomer, group (C) is a cationic ethylenic monomer comprising at least two alkoxy groups, and wherein, the limits being included :

a) p has a value between 35% and 65% by weight, relative to the total weight of monomers,
b) q has a value between 20% and 60% by weight, relative to the total weight of monomers,
c) r has a value between 5% and 20% by weight, relative to the total weight of monomers,
d) with p + q + r = 100% by weight, relative to the total weight of monomers ; in group (A) of the anionic

type :

- $R_1$ is H or a carboxyl or ester group,
- $R_2$ is H or an alkyl group with 1 to 3 carbon atoms,
- $R_3$ is a group with at least one acidic function that is at least partly in the salt form ;

  in group (B) of the nonionic type :
- $R_4$ is -CO-$NH_2$, -CO-$OR_4$', -CO-$NR_4$"$R_4$"', -CN, $CH_3$-CO-O-, or

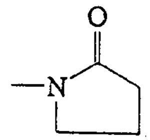

  wherein :
  - $R_4$' is an alkyl or alkoxy group with 1 to 4 carbon atoms,
  - $R_4$" is H or an alkyl group with 1 to 4 carbon atoms,
  - $R_4$"' is an alkyl group with 1 to 4 carbon atoms, and
- $R_5$ is H or an alkyl group with 1 to 4 carbon atoms ;

in group (C) of the cationic type :

- R is an alkyl group with 1 to 4 carbon atoms,
- X is a sulfate or halogen counter-ion,
- Z is N or S,
- n = 2 to 30,
- $R_6$ is H or a carboxyl group,
- $R_7$ is H, an alkyl group with 1 to 3 carbon atoms or a carboxyl group,
- $R_8$ is an aryl or aralkyl or alkaryl group, each having 1 to 6 carbon atoms in the alkyl group, or an ester group or a substituted amide group, or a -$CH_2$- group or an urethane group of the general formula :

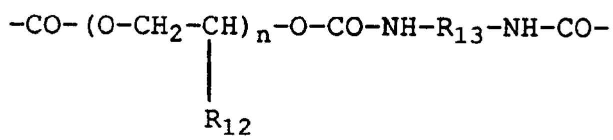

  wherein :
  - $R_{12}$ is H or $CH_3$,
  - $R_{13}$ is an alkyl or aryl group, and
  - n = 2 to 30 ; and
- $R_9$ is H or $CH_3$ ;

  when Z is N :
- $R_{10}$ is an alkyl chain with 8 to 22 carbon atoms or a group of the general formula :

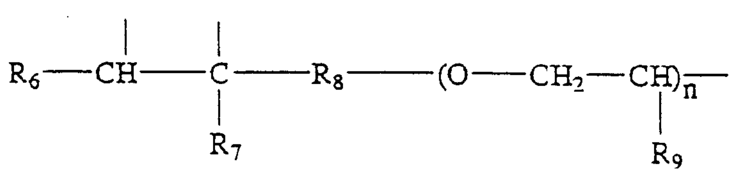

  with n = 2 to 30, and

  when Z is S :
- $R_{10}$ does not exist ; and
- $R_{11}$ is an alkyl chain with 8 to 22 carbon atoms.

**2.** An agent according to claim 1, characterized in that, relative to the total weight of monomers, p has a value between 40% and 60% by weight, q has a value between 25% and 55% by weight, and r has a value between 5% and 15% by weight.

3. An agent according to claim 1 or 2, characterized in that it is chosen among the copolymers having a specific viscosity between 0.40 and 0.70.

4. Use of the agent according to any one of claims 1 to 3 for the preparation of aqueous suspensions of pigments and/or inorganic substances, by grinding and/or dispersing, in an amount of 0.05 to 2% by weight of dry substance, relative to the dry weight of the substances dispersed.

5. Use according to claim 4, characterized in that the agent according to any one of claims 1 to 3 is used in an amount of 0.1% to 1% by weight of dry substance, relative to the dry weight of the substances dispersed.

6. Aqueous suspensions of pigments and/or inorganic fillers, the zeta potential of which is close to zero, characterized in that they contain at least one amphoteric, water-soluble grinding and/or dispersing agent according to any one of claims 1 to 3.

7. Application of at least one agent according to any one of claims 1 to 3 to the field of paper.

8. Application of at least one agent according to any one of claims 1 to 3 to the field of paints.

9. Application of at least one agent according to any one of claims 1 to 3 to the field of plastics.